# EUROPEAN PATENT APPLICATION

(11) **EP 4 848 772 A1**
(43) Date of publication of application: **02.12.2026**
(21) Application number: 24923512.8
(22) Date of filing: 10.12.2024
(51) Int. Cl.: H04W 12/06

(54) **COMMUNICATION METHOD AND APPARATUS**

(30) Priority: 07.02.2024 CN 202410175792
(71) Applicant: Huawei Technologies Co., Ltd., Shenzhen, Guangdong 518129 (CN)
(72) Inventor: YU, Youyang, Shenzhen, Guangdong 518129 (CN); HOU, Yuzhu, Shenzhen, Guangdong 518129 (CN)
(74) Representative: Huawei European IPR
(86) International application number: PCT/CN2024/138147
(87) International publication number: WO 2025/167310

(57) **Abstract**

This application provides a communication method and apparatus, and belongs to the field of communication technologies, to establish a user plane connection through non-3GPP access at lower costs. The method includes: A user plane network element receives information about a first terminal from the first terminal; the user plane network element determines, based on the information about the first terminal, a session management network element and/or a session between the user plane network element and the session management network element; the user plane network element sends authentication information of the first terminal or first information to the session management network element, or the user plane network element transfers the authentication information of the first terminal or the first information through the session; the session management network element triggers authentication on the first terminal based on the authentication information of the first terminal or the first information; and the user plane network element establishes a secure channel to the first terminal when the authentication on the first terminal succeeds.

## Description

This application claims priority to Chinese Patent Application No. 202410175792.X, filed with the China National Intellectual Property Administration on February 7, 2024 and entitled "COMMUNICATION METHOD AND APPARATUS", which is incorporated herein by reference in its entirety.

### TECHNICAL FIELD

This application relates to the communication field, and in particular, to a communication method and apparatus.

### BACKGROUND

Currently, a 5th generation (5th generation, 5G) mobile communication core network (core network, CN), namely, a 5GC, supports non-3rd generation partnership project (non-3rd generation partnership project, non-3GPP) access, which is N3G access for short, for example, untrusted non-3GPP access and trusted non-3GPP access. The untrusted non-3GPP is specifically, for example, untrusted wireless local area network (wireless local area network, WLAN) access, and the trusted non-3GPP access is specifically, for example, trusted WALN access and wired network access, which is specifically, for example, fixed home network access. Regardless of which non-3GPP access is used, an N3G access gateway, for example, a non-3GPP interworking function (non-3GPP interworking function, N3IWF), needs to be deployed in a network for non-3GPP access, so that user equipment (user equipment, UE) accesses the network through the N3G access gateway, and then the N3G access gateway establishes a user plane connection of the UE.

However, implementation costs of establishing the user plane connection by the N3G access gateway are high. To be specific, the N3G access gateway needs to be deployed in the network, and the UE also needs to support transmission of a non-access stratum (non-access stratum, NAS) message in the N3G. Therefore, how to establish the user plane connection through non-3GPP access at lower costs is an urgent problem to be resolved currently.

### SUMMARY

Embodiments of this application provide a communication method and apparatus, to establish a user plane connection through non-3GPP access at lower costs.

To achieve the foregoing objective, this application uses the following technical solutions.

According to a first aspect, a communication method is provided. The method includes: A user plane network element serving a first terminal receives information about the first terminal from the first terminal; the user plane network element determines, based on the information about the first terminal, a session management network element serving the first terminal, and/or determines a session between the user plane network element and the session management network element; the user plane network element sends authentication information of the first terminal or first information to the session management network element, or the user plane network element transfers the authentication information of the first terminal or the first information through the session; the session management network element receives the authentication information of the first terminal or the first information from the user plane network element, or the session management network element receives the authentication information of the first terminal or the first information that is transferred through the session; the session management network element triggers authentication on the first terminal based on the authentication information of the first terminal or the first information; and the user plane network element establishes a secure channel to the first terminal when the authentication on the first terminal succeeds. The user plane network element described in this specification may also be a security gateway function, or a security gateway function co-deployed with the user plane network element, or an access network element function, or an access gateway function co-deployed with the user plane network element. This is not limited in this specification.

It can be learned that, after obtaining the information about the first terminal, the user plane network element may select the session management network element or select the session corresponding to the session management network element, so that the user plane network element and the session management network element transfer the authentication information of the first terminal or the first information in the authentication. Further, the user plane network element establishes the secure channel to the first terminal when the authentication on the first terminal succeeds. In other words, a user plane connection is directly established without using an N3G access gateway. In this way, the N3G access gateway may not be deployed in a network, and the terminal may not support transmission of a non-access stratum NAS message in the N3G, so that a user plane connection through non-3GPP access can be established at lower costs.

It can be further learned that, different from a conventional technology in which the authentication on the first terminal is triggered by a NAS stratum (for example, an access and mobility management network element), in this embodiment of this application, the user plane network element may indicate the session management network element to trigger the authentication on the first terminal, so that the authentication bypasses the NAS stratum, in other words, the NAS message may not be transferred. In this way, the terminal may not support the transmission of the non-access stratum NAS message in the N3G either, thereby implementing establishment of the user plane connection through non-3GPP access at the lower costs.

In a possible design solution, the information about the first terminal includes at least one of address information of the first terminal, temporary identity information of the first terminal, permanent identifier information of the first terminal, or service information of the first terminal.

The address information of the first terminal may be an IP address of the first terminal, where the IP address may be an IP address of a terminal side that is obtained by the first terminal from a protocol data unit PDU session established on a 3GPP side. The temporary identity information of the first terminal may be a 5G-globally unique temporary UE identity GUTI that is obtained by the first terminal through registration on the 3GPP side. The permanent identifier information of the first terminal may be a subscription permanent identifier SUPI or a subscription concealed identifier SUCI of the first terminal. The service information of the first terminal may be at least one of a data network name DNN or slice information.

Further, the first information is first indication information, where the first indication information indicates the session management network element to initiate the authentication on the first terminal. In other words, the first indication information may be a new information element, which explicitly indicates the session management network element to initiate the authentication on the first terminal, so as to implement decoupling from an existing information element. This may enable a more flexible indication manner. Alternatively, the first information is permanent identifier information of the first terminal or temporary identity information of the first terminal, and implicitly indicates to trigger the authentication on the first terminal. In other words, an existing information element is reused, thereby reducing indication overheads.

Further, that the session management network element triggers the authentication on the first terminal based on the first information includes: The session management network element sends identifier information of the first terminal to an authentication network element serving the first terminal; or a session management gateway generates an EAP message (for example, an EAP response/identity or an EAP request/identity message), where the EAP message includes the identifier information of the first terminal, and the session management network element sends the EAP message to the authentication network element. The authentication network element receives the identifier information of the first terminal from the session management network element; or the authentication network element receives the EAP message from the session management network element, and obtains the identifier information of the first terminal from the EAP message. The authentication network element obtains, based on the identifier information of the first terminal, an authentication vector of the first terminal from a data management network element serving the first terminal. The authentication network element performs authentication on the first terminal based on the authentication vector. The authentication network element sends at least one of authentication success information or a security key to the session management network element when the authentication performed by the authentication network element on the first terminal succeeds. The session management network element receives the at least one of the authentication success information or the security key from the session management network element. The session management network element sends the at least one of the authentication success information or the security key to the user plane network element.

Alternatively, that the session management network element triggers the authentication on the first terminal based on the first information includes: The session management network element sends identifier information of the first terminal to a data management network element serving the first terminal; or a session management gateway generates an EAP message, where the EAP message includes the identifier information of the first terminal, and the session management network element sends the EAP message to the data management network element. The data management network element receives the identifier information of the first terminal from the session management network element. The data management network element receives the EAP message from the session management network element, and obtains the identifier information of the first terminal from the EAP message. The data management network element sends, based on the identifier information of the first terminal, an authentication vector of the first terminal to an authentication network element serving the first terminal. The authentication network element receives the authentication vector of the first terminal from the data management network element. The authentication network element performs authentication on the first terminal based on the authentication vector. The authentication network element sends at least one of authentication success information or a security key to the session management network element when the authentication performed by the authentication network element on the first terminal succeeds. The session management network element receives the at least one of the authentication success information or the security key from the session management network element. The session management network element sends the at least one of the authentication success information or the security key to the user plane network element.

It can be learned that the session management network element may trigger the authentication on the first terminal by interacting with the authentication network element, or may trigger the authentication on the first terminal by directly interacting with the data management network element. A specific implementation is not limited, and may be flexibly selected based on an actual situation.

Further, the method according to the first aspect may further include: The user plane network element receives the at least one of the authentication success information or the security key from the session management network element; and the user plane network element determines, based on the at least one of the authentication success information or the security key, that the authentication on the first terminal succeeds. Based on this, that the user plane network element establishes the secure channel to the first terminal includes: The user plane network element establishes the secure channel between the user plane network element and the first terminal by using the security key. In other words, the user plane network element may establish the secure channel to the first terminal only when determining that the authentication on the first terminal succeeds, to avoid a security risk caused by establishing the secure channel when the authentication on the first terminal fails.

In a possible design solution, the user plane network element determines, based on the information about the first terminal, the session management network element serving the first terminal includes: The user plane network element obtains the service information of the first terminal; and the user plane network element selects a session management network element that supports the service information of the first terminal as the session management network element serving the first terminal.

In a possible design solution, that the user plane network element determines, based on the information about the first terminal, the session management network element serving the first terminal includes: The user plane network element determines the service information of the first terminal based on a configuration of the user plane network element, and selects a session management network element that supports the service information of the first terminal as the session management network element serving the first terminal.

It can be learned that if the first terminal provides the service information, the user plane network element may preferentially select a proper session management network element based on the service information provided by the first terminal; or if the first terminal does not provide the service information, the user plane network element may alternatively select, based on preconfigured information, a session management network element that is considered proper by the user plane network element. This improves a success rate of selecting the session management network element, and avoids a procedure failure caused by a failure of selecting the session management network element.

Optionally, the method according to the first aspect may further include: The user plane network element receives, from at least one session management network element, service information supported by the at least one session management network element, to ensure that the selected session management network element is a session management network element that supports the service information of the first terminal, thereby avoiding the procedure failure caused by the session management network element that does not support the service information. The at least one session management network element includes the session management network element serving the first terminal.

In a possible design solution, the method according to the first aspect may further include: When the authentication on the first terminal succeeds, the session management network element generates a session context of the first terminal based on session subscription information that is related to the service information of the first terminal and that is obtained from the data management network element. The session context of the first terminal is used to manage the session of the first terminal, and the session of the first terminal is carried by the secure channel. In this way, session management in the non-3GPP access is implemented, to ensure service reliability.

In a possible design solution, the method according to the first aspect may further include: When an authentication procedure for the first terminal succeeds, the data management network element sends, to the session management network element, an identifier of an access and mobility management network element serving the first terminal; the session management network element receives the identifier of the access and mobility management network element from the data management network element; and the session management network element sends access information of the first terminal to the access and mobility management network element based on the identifier of the access and mobility management network element, where the access information of the first terminal indicates at least one of the following: An access type of the first terminal is non-3rd generation partnership project 3GPP access, or a status of the first terminal is a connected state or an active state. The connected state of the first terminal indicates that the first terminal establishes a connection to the network, but the network cannot transmit user plane data of the first terminal, and the active state of the first terminal indicates that the network can transmit the user plane data of the first terminal.

In a possible design solution, the method according to the first aspect may further include: When an authentication procedure for the first terminal succeeds, the data management network element sends access information of the first terminal to an access and mobility management network element serving the first terminal, where the access information of the first terminal indicates at least one of the following: An access type of the first terminal is non-3rd generation partnership project 3GPP access, or a status of the first terminal is a connected state or an active state. The connected state of the first terminal indicates that the first terminal establishes a connection to the network, but the network cannot transmit user plane data of the first terminal, and the active state of the first terminal indicates that the network can transmit the user plane data of the first terminal.

It can be learned that, in the non-3GPP access, the network (for example, the access and mobility management network element) may track and manage the status of the first terminal, and provide the user plane data of a service for the first terminal only when the first terminal is in the active state. This can avoid redundant transmission, and can also ensure data security.

According to a second aspect, a communication method is provided. The method includes: A user plane network element serving a first terminal receives information about the first terminal from the first terminal; the user plane network element determines, based on the information about the first terminal, a session management network element serving the first terminal, and/or determines a session between the user plane network element and the session management network element; the user plane network element sends authentication information of the first terminal or first information to the session management network element, or the user plane network element transfers the authentication information of the first terminal or the first information through the session, where the authentication information of the first terminal or the first information is used for authentication on the first terminal; and the user plane network element establishes a secure channel to the first terminal when the authentication on the first terminal succeeds.

In a possible design solution, the information about the first terminal includes at least one of address information of the first terminal, temporary identity information of the first terminal, permanent identifier information of the first terminal, or service information of the first terminal.

Optionally, the first information is first indication information, or the first information is permanent identifier information of the first terminal or temporary identity information of the first terminal, and the first indication information indicates the session management network element to initiate the authentication on the first terminal.

Optionally, the method according to the second aspect may further include: The user plane network element receives at least one of authentication success information or a security key from the session management network element, where the security key is a key determined in the authentication on the first terminal; and the user plane network element determines, based on the at least one of the authentication success information or the security key, that the authentication on the first terminal succeeds.

Further, that the user plane network element establishes the secure channel to the first terminal includes: The user plane network element establishes the user plane secure channel between the user plane network element and the first terminal by using the security key.

In a possible design solution, the user plane network element determines, based on the information about the first terminal, the session management network element serving the first terminal includes: The user plane network element obtains the service information of the first terminal; and the user plane network element selects a session management network element that supports the service information of the first terminal as the session management network element serving the first terminal.

In a possible design solution, that the user plane network element determines, based on the information about the first terminal, the session management network element serving the first terminal includes: The user plane network element determines the service information of the first terminal based on a configuration of the user plane network element, and selects a session management network element that supports the service information of the first terminal as the session management network element serving the first terminal.

Optionally, the method according to the second aspect may further include: The user plane network element receives, from at least one session management network element, service information supported by the at least one session management network element, where the at least one session management network element includes the session management network element serving the first terminal.

It may be understood that, for technical effects of the method in the second aspect, refer to the related descriptions of the method in the first aspect. Details are not described again.

According to a third aspect, a communication method is provided. The method includes: A session management network element serving a first terminal receives authentication information of the first terminal or first information from a user plane network element serving the first terminal, or the session management network element receives the authentication information of the first terminal or the first information that is transferred through a session between the user plane network element and the session management network element; and the session management network element triggers authentication on the first terminal based on the authentication information of the first terminal or the first information.

Optionally, the first information is first indication information, or the first information is permanent identifier information of the first terminal or temporary identity information of the first terminal, and the first indication information indicates the session management network element to initiate the authentication on the first terminal.

Optionally, that the session management network element triggers the authentication on the first terminal based on the first information includes: The session management network element sends identifier information of the first terminal to an authentication network element serving the first terminal, or the session management network element generates an EAP message, and sends the EAP message to the authentication network element, where the EAP message includes the identifier information of the first terminal, and the identifier information of the first terminal is used to trigger the authentication network element to perform authentication on the first terminal. The session management network element receives at least one of authentication success information or a security key from the authentication network element when the authentication performed by the authentication network element on the first terminal succeeds, where the security key is a key determined in the authentication on the first terminal. The session management network element sends the at least one of the authentication success information or the security key to the user plane network element.

In a possible design solution, the method according to the third aspect may further include: The session management network element sends service information supported by the session management network element to the user plane network element.

In a possible design solution, the method according to the third aspect may further include: When the authentication on the first terminal succeeds, the session management network element generates a session context of the first terminal based on session subscription information that is related to the service information of the first terminal and that is obtained from a data management network element. The session context of the first terminal is used to manage the session of the first terminal, and the session of the first terminal is carried by a secure channel.

In a possible design solution, the method according to the third aspect may further include: When an authentication procedure for the first terminal succeeds, the session management network element receives an identifier of an access and mobility management network element from the data management network element; and the session management network element sends access information of the first terminal to the access and mobility management network element based on the identifier of the access and mobility management network element, where the access information of the first terminal indicates at least one of the following: An access type of the first terminal is non-3rd generation partnership project 3GPP access, or a status of the first terminal is a connected state or an active state. The connected state of the first terminal indicates that the first terminal establishes a connection to a network, but the network cannot transmit user plane data of the first terminal, and the active state of the first terminal indicates that the network can transmit the user plane data of the first terminal.

It may be understood that, for technical effects of the method in the third aspect, refer to the related descriptions of the method in the first aspect. Details are not described again.

According to a fourth aspect, a communication method is provided. The method includes: An authentication network element serving a first terminal receives identifier information of the first terminal from a session management network element serving the first terminal, or the authentication network element receives an EAP message from the session management network element, where the EAP message includes the identifier information of the first terminal, and the authentication network element obtains the identifier information of the first terminal from the EAP message. The authentication network element obtains, based on the identifier information of the first terminal, an authentication vector of the first terminal from a data management network element serving the first terminal. The authentication network element performs authentication on the first terminal based on the authentication vector. The authentication network element sends at least one of authentication success information or a security key to the session management network element when the authentication performed by the authentication network element on the first terminal succeeds, where the security key is used by the first terminal to establish a secure channel.

It may be understood that, for technical effects of the method in the fourth aspect, refer to the related descriptions of the method in the first aspect. Details are not described again.

According to a fifth aspect, a communication apparatus is provided. The communication apparatus includes a module configured to perform the method according to any one of the first aspect to the fourth aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In a possible design solution, the communication apparatus according to the fifth aspect may further include a memory. The memory and a processor may be integrated together, or may be disposed separately. The memory may be configured to store instructions in any one of the first aspect to the fourth aspect.

In this embodiment of this application, the communication apparatus according to the fifth aspect may be a network device, a chip (system) or another part or component that may be disposed in the network device, or an apparatus including the network device.

It may be understood that, for technical effects of the apparatus according to the fifth aspect, refer to the related descriptions of the method according to any one of the first aspect to the fourth aspect. Details are not described again.

According to a sixth aspect, a communication apparatus is provided. The communication apparatus includes a processor. The processor is coupled to a memory. The processor is configured to execute instructions stored in the memory, to cause the communication apparatus to perform the method according to any one of the first aspect to the fourth aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In this embodiment of this application, the communication apparatus according to the sixth aspect may be the network device in any one of the first aspect to the fourth aspect, a chip (system) or another part or component that may be disposed in the network device, or an apparatus including the network device.

In addition, for technical effects of the communication apparatus according to the sixth aspect, refer to the technical effects of the method according to any one of the first aspect to the fourth aspect. Details are not described herein again.

According to a seventh aspect, a communication apparatus is provided, including a processor and a memory. The memory is configured to store instructions, and when the processor executes the instructions, the communication apparatus is caused to perform the method according to any one of the first aspect to the fourth aspect.

In a possible design solution, the communication apparatus according to the seventh aspect may further include a transceiver. The transceiver may be a transceiver circuit or an interface circuit. The transceiver may be used by the communication apparatus according to the sixth aspect to communicate with another communication apparatus.

In this embodiment of this application, the communication apparatus according to the seventh aspect may be the network device in any one of the first aspect to the fourth aspect, a chip (system) or another part or component that may be disposed in the network device, or an apparatus including the network device.

In addition, for technical effects of the communication apparatus according to the seventh aspect, refer to the technical effects of the method according to any one of the first aspect to the fourth aspect. Details are not described herein again.

According to an eighth aspect, a chip is provided, where the chip includes a controller and an interface circuit, and the controller is configured to interact with another apparatus by using the interface circuit, to perform the method according to any one of the first aspect to the fourth aspect.

According to a ninth aspect, a communication system is provided. The communication system includes at least one of the following: a user plane network element configured to perform the method according to the second aspect, a session management network element configured to perform the method according to the third aspect, or an authentication network element configured to perform the method according to the fourth aspect.

According to a tenth aspect, a computer-readable storage medium is provided, where the computer-readable storage medium includes storing a computer program or instructions, and when the computer program or the instructions are run, the method according to any one of the first aspect to the fourth aspect is performed.

According to an eleventh aspect, a computer program product is provided, including a computer program or instructions, where when the computer program or the instructions are run, the method according to any one of the first aspect to the fourth aspect is performed.

### BRIEF DESCRIPTION OF DRAWINGS

FIG. 1 is a diagram 1 of an architecture of a 5GS;
FIG. 2 is a diagram 2 of an architecture of a 5GS;
FIG. 3 is a diagram of an architecture of a communication system according to an embodiment of this application;
FIG. 4 is a schematic flowchart 1 of a communication method according to an embodiment of this application;
FIG. 5a and FIG. 5b are a schematic flowchart 2 of a communication method according to an embodiment of this application;
FIG. 6a and FIG. 6b are a schematic flowchart 3 of a communication method according to an embodiment of this application;
FIG. 7a and FIG. 7b are a schematic flowchart 4 of a communication method according to an embodiment of this application;
FIG. 8 is a diagram 1 of a structure of a communication apparatus according to an embodiment of this application; and
FIG. 9 is a diagram 2 of a structure of a communication apparatus according to an embodiment of this application.

### DESCRIPTION OF EMBODIMENTS

The technical solutions in embodiments of this application may be applied to various communication systems, for example, a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as 5.5G and a 6th generation (6th generation, 6G) mobile communication system.

For ease of understanding, the following first describes technical terms in embodiments of this application.

1. 5G mobile communication system (5G system (5G system, 5GS) for short):

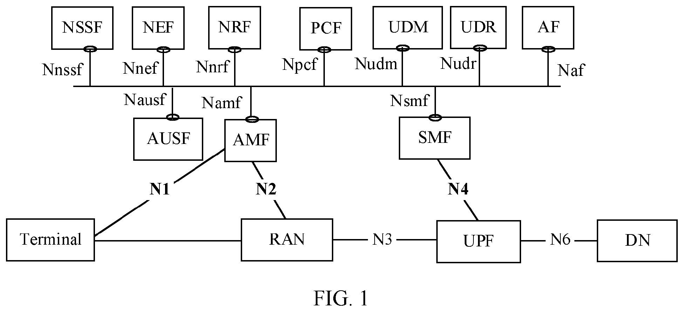

FIG. 1 is a diagram 1 of an architecture of a 5GS. As shown in FIG. 1, the 5GS includes an access network (access network, AN) and a CN, and may further include a terminal.

There may be one or more terminals. The terminal may be a terminal having receiving and sending functions, or may be a chip or a chip system disposed in the terminal. The terminal may also be referred to as UE, an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot air balloon, an uncrewed aerial vehicle, or an airplane), or the like. The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. A terminal device may alternatively be another device having functions of the terminal. For example, the terminal device may alternatively be a device that functions as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be mounted in a terminal device or used in conjunction with a terminal device. In embodiments of this application, the chip system may include a chip, or may include a chip and another discrete component.

The foregoing AN is for implementing an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, or may be referred to as a radio access network (radio access network, RAN) device. The CN is mainly responsible for maintaining subscription data of a mobile network, and provides functions such as session management, mobility management, policy management, and security authentication for the terminal. The CN mainly includes the following network elements: a user plane function (user plane function, UPF) network element, an authentication server function (authentication server function, AUSF) network element, an access and mobility management function (access and mobility management function, AMF) network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR), and an application function (application function, AF).

There may be one or more RAN devices, namely, access network apparatuses. The access network apparatus may be a device having a wireless transceiver function, or may be a chip or a chip system disposed in the device, and is located in an access network (access network, AN) in a communication system, to provide an access service for the terminal. For example, the access network apparatus may be referred to as a radio access network (radio access network, RAN) device, and may be specifically an access network device in a next-generation mobile communication system, for example, a 6G access network device, for example, a 6G base station. Alternatively, in the next-generation mobile communication system, the access network apparatus may be named in another manner, which falls within the protection scope of embodiments of this application. This is not limited in this application. Alternatively, the access network apparatus may include a gNB in 5G, for example, a new radio (new radio, NR) system, may include one or a group of antenna panels (including a plurality of antenna panels) of a base station in 5G, or may be a network node that forms a gNB, a transmission point (transmission reception point, TRP, or transmission point, TP), or a transmission measurement function (transmission measurement function, TMF), for example, a central unit (central unit, CU), a distributed unit (distributed unit, DU), a CU-control plane (control plane, CP), or a CU-user plane (user plane, UP), a radio unit (radio unit, RU), an RSU having a base station function, a wired access gateway, or a 5G core network element. Alternatively, the access network apparatus may further include an access point (access point, AP) in a wireless fidelity (wireless fidelity, Wi-Fi) system, a wireless relay node, a wireless backhaul node, various forms of a macro base station, a micro base station (also referred to as a small cell), a relay station, an access point, a wearable device, a vehicle-mounted device, or the like.

The CU and the DU may be separately disposed, or may be included in a same network element, for example, in a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The UPF network element is mainly responsible for user data processing (forwarding, receiving, charging, and the like). For example, the UPF network element may receive user data from a data network (data network, DN), and forward the user data to the terminal via the access network device. The UPF network element may alternatively receive user data from the terminal via the access network device, and forward the user data to the DN. A DN network element is an operator network that provides a data transmission service for a user, for example, an internet protocol (internet protocol, IP) multi-media service (IP multi-media service, IMS), and an internet (internet). The DN may be an external network of an operator, or may be a network controlled by the operator, and is configured to provide a service for the terminal device.

The AUSF network element is mainly configured to perform security authentication on the terminal.

The AMF network element is mainly for mobility management in the mobile network, for example, user location update, registration of a user to a network, and user handover.

The SMF network element is mainly for session management in the mobile network, for example, session establishment, modification, and release. For example, specific functions are allocation of an IP address for a user and selection of a UPF network element that provides a data packet forwarding function.

The PCF network element mainly supports providing a unified policy framework to govern network behavior, and providing policy rules for a control layer network function, and is responsible for accessing user subscription information relevant for policy decisions. The PCF network element may provide a policy like a quality of service (quality of service, QoS) policy or a slice selection policy to the AMF network element and the SMF network element.

The NSSF network element is mainly configured to select a network slice for the terminal.

The NEF network element is mainly for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF mainly supports interaction with the CN to provide a service, for example, affecting a data routing decision-making and a policy control function, or providing some third-party services for a network side. Optionally, the AF may provide a personal identification number (personal identification number, PIN) service, which may also be referred to as a PIN-AF.

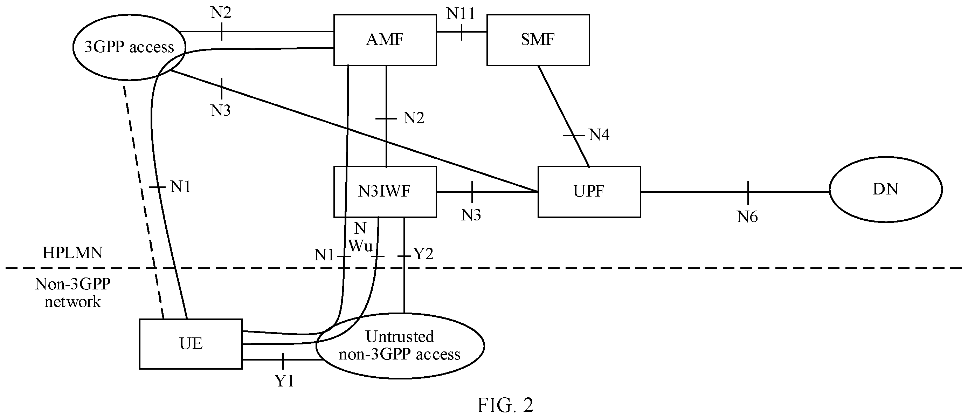

When a 5GC (5G core network) supports untrusted non-3GPP (N3G for short) access, a 5GS architecture is shown in FIG. 2. An N3IWF is also referred to as an untrusted non-3GPP access gateway, for example, may be an untrusted WLAN access gateway, to support an untrusted WLAN access technology.

In addition, the 5GC may also support trusted non-3GPP access and/or wired network access. A trusted non-3GPP network includes a trusted WALN network, and a wired network includes fixed home network access and the like. A network side architecture is similar to an untrusted non-3GPP access architecture. For example, the N3IWF may be replaced with a trusted WLAN access gateway (trusted non-3GPP gateway function, TNGF), or a wired network access gateway (wireline access gateway function, W-AGF). An access network device between the UE and the access gateway (for example, the TNGF or the W-AGF) includes a WLAN AP, a wired network access network device (fixed access network, FAN), a switch, a router, and the like.

An N3G access technology includes a WLAN access technology and a wired access technology. The WLAN access technology corresponds to a WLAN AP deployed in a campus or a WLAN AP hotspot deployed in a public place, and the wired access technology corresponds to wired access deployed in a home network. In addition, the WLAN access technology can be classified into a trusted WLAN and an untrusted WLAN. In conclusion, the non-3GPP access technology includes access technologies such as the trusted non-3GPP access, the untrusted non-3GPP access, the trusted WLAN access, the untrusted WLAN access, and the wired access, which is also referred to as fixed network access. Regardless of whether access is the trusted non-3GPP access or the untrusted non-3GPP access, a core network side may support the point-to-point interface protocol shown in FIG. 2, or support a service-based interface that is consistently used in the architecture of accessing the core network through 3GPP access shown in FIG. 1.

It can be learned that when the terminal device accesses the 5GC by using the non-3GPP access technology, the terminal device needs to use a non-3GPP access gateway, namely, an N3WIF network element. This means that the terminal device needs to support an interaction protocol between the terminal device and the non-3GPP access gateway, and an operator further needs to synchronously deploy the non-3GPP access gateway after deploying a non-3GPP access point. This greatly increases network deployment costs. Particularly for future toB campus scenarios, industry users expect that 5G cellular network coverage in a campus can be implemented with low network construction costs, and coverage of non-3GPP access technologies can be supported. Therefore, a simplified 5GC solution for non-3GPP access is required. In addition, in addition to UE supporting 5GC access (supporting a SIM card and a NAS module), there are other terminal devices (xdevices, which do not support the NAS module and the SIM card), where the xdevice usually supports non-3GPP access technologies such as WLAN access or wired access. Similar to the UE terminal device, the foregoing xdevice device needs to be deployed with a non-3GPP access gateway, and the non-3GPP access gateway acts as a proxy of the xdevice to support the NAS module, resulting in higher deployment costs of the non-3GPP access gateway.

For the foregoing technical problems, embodiments of this application provide the following technical solutions.

The following describes technical solutions of this application with reference to accompanying drawings.

In embodiments of this application, "indication" may include a direct indication and an indirect indication, or may include an explicit indication and an implicit indication. Information indicated by specific information is referred to as to-be-indicated information. In a specific implementation process, the to-be-indicated information may be indicated in a plurality of manners. By way of example but not limitation, the to-be-indicated information may be directly indicated, for example, by using the to-be-indicated information or an index of the to-be-indicated information. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, specified in a protocol), to reduce indication overheads to some extent. In addition, a common part of all pieces of information may be identified and indicated in a unified manner, to reduce indication overheads caused by separately indicating same information.

Furthermore, specific indication manners may alternatively be various existing indication manners, for example, but not limited to, the foregoing indication manners and various combinations thereof. For details of the various indication manners, refer to the conventional technology. The details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

It should be understood that the to-be-indicated information may be sent as a whole, or may be divided into multiple pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmitting end device by sending configuration information to a receiving end device.

In this application, "sending information" may be understood as that a device sends information to another device, or may be understood as that a logical module in a device sends information to another logical module. For example, "a network device sends information" may be understood as that the network device sends information to another device (for example, a terminal or another network device), or may be understood as that a logical module 1 in the network device sends information to a logical module 2 in the network device.

In this application, "receiving information" may be understood as that a device receives information from another device, or may be understood as that a logical module in a device receives information from another logical module. For example, "a network device receives information" may be understood as that the network device receives information from another device (for example, a terminal or another network device), or may be understood as that a logical module 1 in the network device receives information from a logical module 2 in the network device.

In this application, "sending information to... (for example, a terminal)" or a related illustration in the accompanying drawings may be understood as that a destination of the information is the terminal, and may include directly or indirectly sending the information to the terminal. "Receiving information from... (for example, a terminal)" or "receiving information from... (for example, a terminal)" or "receiving information sent by (for example, a terminal)" or a related illustration in the accompanying drawings may be understood as that a source of the information is the terminal, and may include directly or indirectly receiving information from the terminal. Necessary processing, for example, a format change, may be performed on information between the source that sends the information and the destination, but the destination can understand valid information from the source. A similar expression in this application may be understood similarly, and details are not described herein again.

"Predefinition" or "preconfiguration" may be implemented by pre-storing corresponding code or a corresponding table in a device, or may be implemented in another manner that may be used for indicating related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories are integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and are not intended to limit time, and the device is not required to perform a determining action during implementation, and do not mean any other limitation.

In descriptions of embodiments of this application, unless otherwise stated, "/" means an "or" relationship between associated objects, for example, A/B may represent A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "multiple" means two or more. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

For ease of understanding embodiments of this application, a communication system is first used as an example to describe in detail a communication system applicable to embodiments of this application.

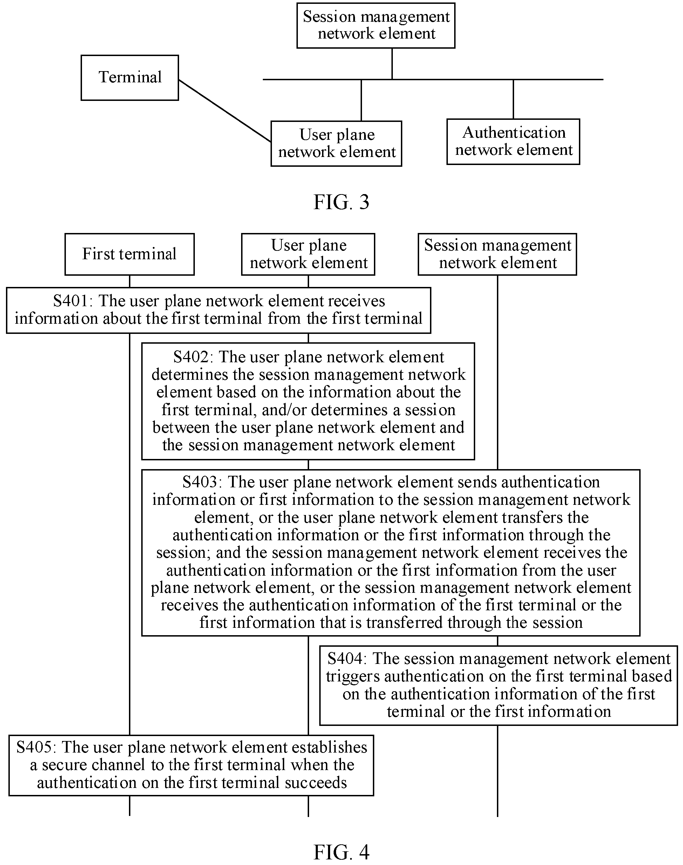

As shown in FIG. 3, the communication system may be applicable to the foregoing 5GS, and mainly includes a terminal, a user plane network element, a session management network element, and an authentication network element.

The terminal may be a terminal that supports non-3GPP access. For ease of understanding, the terminal that supports the non-3GPP access is defined as an xdevice (xDevice), or may be replaced with another possible representation manner. This is not limited herein. An identifier of the xdevice, that is, an xdevice identifier (xDevice ID), which may be used to select a user plane network element (for example, a UPF network element) for the xdevice, may be specifically a user equipment identifier used by the xdevice for non-3GPP access, in other words, may be used to identify a device that supports (or uses) the non-3GPP access, for example, may be a subscription permanent identifier (subscription permanent identifier, SUPI), a subscription concealed identifier (subscription concealed identifier, SUCI), a 5G temporary identity (5G-globally unique temporary UE identity, 5G-GUTI), or a user equipment identifier in a network access identifier (network access identifier, NAI) format. The NAI may be based on an existing defined format, for example, a user equipment identifier and a domain name (domain name). The user equipment identifier may alternatively be the foregoing SUPI, SUCI, 5G-GUTI, or another type of user equipment identifier. This is not limited.

It may be understood that, if the xdevice supports both the non-3GPP access and 3GPP access, the xdevice may be understood as a terminal in a conventional sense (that is, a terminal supporting the 3GPP access), in other words, the xdevice and the terminal are a same device. In this way, the xdevice identifier is a terminal identifier, for example, a UE ID. If the xdevice supports only the non-3GPP access, the xdevice usually cannot be understood as the terminal in a conventional sense, in other words, the xdevice and the terminal are different devices. In this way, the xdevice identifier and the terminal identifier may also be different identifiers. For example, the xdevice is a device that does not support a NAS module and a SIM card, and the xdevice usually supports non-3GPP access technologies such as WLAN access or wired access.

In addition, for a device form of the terminal, refer to the related descriptions of the 5GS. Details are not described herein again.

The user plane network element may be the UPF network element in the foregoing 5GS. For details, refer to the foregoing related descriptions. Alternatively, the user plane network element may be a network element configured to implement a corresponding user plane function in a future communication system. This is not limited herein. In addition, the user plane network element described in this specification may also be a security gateway function, or a security gateway function co-deployed with the user plane network element, or an access network element function, or an access gateway function co-deployed with the user plane network element. This is not limited in this specification.

The session management network element may be the SMF network element in the foregoing 5GS. For details, refer to the foregoing related descriptions. Alternatively, the session management network element may be a network element configured to implement a corresponding function of session management in the future communication system. This is not limited herein.

The data management network element may be the UDM network element in the foregoing 5GS. For details, refer to the foregoing related descriptions. Alternatively, the data management network element may be a network element configured to implement a corresponding function of data management in the future communication system. This is not limited herein.

The authentication network element may be the AUSF network element in the foregoing 5GS. For details, refer to the foregoing related descriptions. Alternatively, the authentication network element may be a network element configured to implement a corresponding application function in the future communication system. This is not limited herein.

In the communication system, after obtaining information about a first terminal, the user plane network element may select the session management network element or select a session corresponding to the session management network element, so that the user plane network element and the session management network element transfer authentication information of the first terminal in authentication. Further, the user plane network element establishes a secure channel to the first terminal when the authentication on the first terminal succeeds. In other words, a user plane connection is directly established without using an N3G access gateway. In this way, the N3G access gateway may not be deployed in a network, and the terminal may not support transmission of a non-access stratum NAS message in the N3G, so that a user plane connection through non-3GPP access can be established at lower costs.

The following further describes the communication method and apparatus in embodiments of this application with reference to the accompanying drawings. It may be understood that, in this application, an example in which a network device and a terminal serve as execution bodies of an interaction example is used for description. However, the execution bodies of the interaction example are not limited in this application. For example, the method performed by the network device in this application may be performed by a module (for example, a chip, a chip system, or a processor) used in the network device, or may be implemented by a logical node, a logical module, or software that can implement all or some functions of the network device. The method performed by the terminal in this application may be performed by a module (for example, a chip, a chip system, or a processor) used in the terminal, or may be implemented by a logical node, a logical module, or software that can implement all or some functions of the terminal.

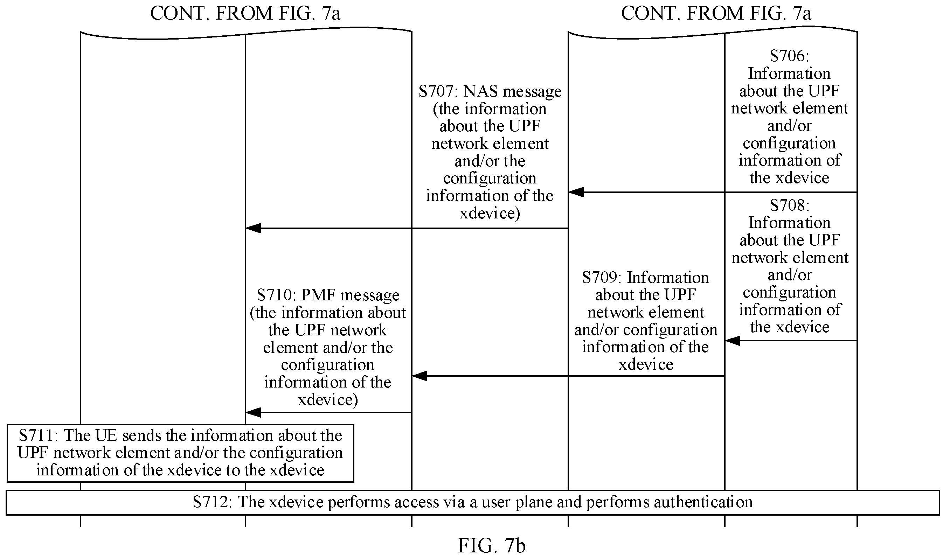

With reference to FIG. 4 to FIG. 7a and FIG. 7b, the following describes, in detail by using method embodiments, interaction procedures between network elements/devices in the foregoing communication system. The communication method provided in embodiments of this application is applicable to the foregoing communication system, and is specifically applied to various scenarios mentioned in the foregoing communication system. Details are described below.

FIG. 4 is a schematic flowchart 1 of a communication method according to an embodiment of this application. The communication method is applicable to the foregoing communication system, and mainly relates to interaction between a first terminal, a user plane network element, and a session management network element.

S401: The user plane network element receives information about the first terminal from the first terminal.

S402: The user plane network element determines the session management network element based on the information about the first terminal, and/or determines a session between the user plane network element and the session management network element.

S403: The user plane network element sends authentication information or first information to the session management network element, or the user plane network element transfers the authentication information or the first information through the session; and the session management network element receives the authentication information or the first information from the user plane network element, or the session management network element receives the authentication information of the first terminal or the first information that is transferred through the session.

S404: The session management network element triggers authentication on the first terminal based on the authentication information of the first terminal or the first information.

S405: The user plane network element establishes a secure channel to the first terminal when the authentication on the first terminal succeeds.

Each step in S401 to S405 is defined below.

S401:
The user plane network element may be a user plane network element serving the first terminal, which may be understood as a user plane network element that provides a user plane service for the first terminal when the first terminal currently performs non-3GPP access, or may be understood as a user plane network element that is selected by a network to provide a user plane service for the first terminal when the first terminal accesses a 5GC in advance through 3GPP access.

The first terminal may be a terminal that supports the non-3GPP access, for example, a terminal in which an xdevice is co-deployed with UE.

The information about the first terminal may include at least one of address information of the first terminal, temporary identity information of the first terminal, permanent identifier information of the first terminal, or service information of the first terminal. The address information of the first terminal may be an IP address of the first terminal, where the IP address may be an IP address of a terminal side that is obtained by the first terminal from a protocol data unit (protocol data unit, PDU) session established on a 3GPP side. The temporary identity information of the first terminal may be a 5G GUTI that is obtained by the first terminal through registration on the 3GPP side, or may be other identifier information. The permanent identifier information of the first terminal may be a SUPI or a SUCI of the first terminal, that is, information obtained by the 3GPP side, or may be other identifier information. The service information of the first terminal may be at least one of a DNN or slice information, for example, network slice selection assistance information (network slice selection assistance information, NSSAI), obtained by the first terminal on the 3GPP side.

In this embodiment of this application, the information about the first terminal may alternatively be replaced with another name, for example, an NAI.

The user plane network element may receive the information about the first terminal from the first terminal over a layer 2 connection established with the first terminal.

For example, the first terminal may obtain address information of the user plane network element, for example, an IP address of the user plane network element, in advance. For example, the first terminal may obtain the address information of the user plane network element from a network through 3GPP access in advance, or the address information of the user plane network element may be preconfigured locally on the first terminal in a protocol-predefined manner, or the first terminal may obtain the address information of the user plane network element from another device, for example, another terminal or an AP of a WLAN. It may be understood that the foregoing is merely some examples, and a manner in which the first terminal obtains the address information of the user plane network element is not limited in this embodiment of this application.

The first terminal may initiate the layer 2 connection, for example, establishment of an IPsec tunnel, to the user plane network element based on the address information of the user plane network element. For example, the first terminal may send an internet key exchange (internet key exchange, IKE) initialization request (IKE_INIT Req) message to the user plane network element, and receive an IKE initialization response message returned by the user plane network element for the IKE initialization request message. In this case, the first terminal may align a parameter related to the IPsec tunnel with the user plane network element, that is, establish the IPsec tunnel. For details, refer to the related descriptions in the conventional technology. Details are not described herein again. In this way, the first terminal may send the information about the first terminal to the user plane network element through the IPsec tunnel. In this case, the information about the first terminal may be carried in an IKE authentication request (IKEAUTH Req) message #1, or may be carried in any other possible message. A message name is not limited in this embodiment of this application. Correspondingly, the user plane network element may receive the information about the first terminal through the IPsec tunnel.

S402:
The session management network element may be a session management network element serving the first terminal, which may be understood as a session management network element that provides a session management service for the first terminal when the first terminal currently performs non-3GPP access.

The session between the user plane network element and the session management network element (denoted as a session management network element #2) may be an N4 session, for example, a packet forwarding control protocol (packet forwarding control protocol, PFCP) session, or may be any possible type of session, for example, a session newly defined in the future. A specific implementation is not limited. The N4 session may be established when the first terminal performs 3GPP access in advance, and is associated with the information about the first terminal. For example, an identifier of the N4 session is associated with the IP address of the first terminal, or may be associated in another manner. This is not specifically limited.

It may be understood that, for S402, if the user plane network element chooses to discover a new session management network element, the new session management network element may be different from the session management network element that has established the session in advance; or if the user plane network element chooses to reuse the existing session, the user plane network element does not perform discovery of the session management network element. Details are separately described below.

### Manner 1: Discover the new session management network element

In a possible implementation, if the first terminal provides the service information of the first terminal, the user plane network element may preferentially use the service information of the first terminal, to select the session management network element. For example, the user plane network element may obtain the service information of the first terminal, for example, the at least one of the DNN or the NSSAI. The user plane network element may select a session management network element that supports the service information of the first terminal as the session management network element serving the first terminal. For example, the service information of the UE includes a DNN #1 and NSSAI #1, an SMF network element #1 supports the DNN #1 and NSSAI #2, the SMF network element #1 supports a DNN #2 and the NSSAI #2, and an SMF network element #3 supports the DNN #1 and the NSSAI #1, so that the UPF network element selects the SMF network element #3 as the SMF network element serving the UE.

In another possible implementation, if the first terminal does not provide the information related to a service of the first terminal, for example, the DNN and/or the NSSAI, the user plane network element may select the session management network element based on a local configuration. For example, the user plane network element may determine the service information of the first terminal based on a local configuration of the user plane network element. For example, the user plane network element may determine locally configured service information, for example, the at least one of the DNN or the NSSAI, as the service information of the first terminal. Then, the user plane network element may select the session management network element that supports the service information of the first terminal as the session management network element serving the first terminal.

After the user plane network element selects the session management network element, the user plane network element may alternatively establish a session, for example, an N4 session, with the selected session management network element. For specific implementation, refer to the conventional technology. This is not limited in this embodiment of this application. In addition, the N4 session mentioned below is not limited in this embodiment of this application, and may be understood as an existing N4 session reused in the following manner 2, or may be an N4 session newly established in the foregoing manner 1.

It may be further understood that specific service information supported by a specific session management network element may be predefined or preconfigured locally on the user plane network element, or may be provided by the session management network element. For example, the user plane network element may receive, from at least one session management network element, service information supported by the at least one session management network element, to ensure that a selected session management network element is a session management network element that supports the service information of the first terminal, thereby avoiding a procedure failure caused by the session management network element that does not support the service information. The at least one session management network element includes the session management network element serving the first terminal.

It can be learned that if the first terminal provides the service information, the user plane network element may preferentially select a proper session management network element based on the service information provided by the first terminal; or if the first terminal does not provide the service information, the user plane network element may alternatively select, based on preconfigured information, a session management network element that is considered proper by the user plane network element. This improves a success rate of selecting the session management network element, and avoids a procedure failure caused by a failure of selecting the session management network element.

### Manner 2: Reuse the existing session management network element

Because the N4 session can be associated with specific information of the first terminal, when obtaining the information about the first terminal, the user plane network element may determine that the information about the first terminal is associated with the N4 session. The identifier of the N4 session and the IP address of the first terminal are used as examples. When obtaining the IP address of the first terminal from the information about the first terminal, the user plane network element may traverse an association relationship, to determine that the IP address of the first terminal is associated with the identifier of the N4 session, that is, determine the N4 session. In this way, the user plane network element determines that the N4 session can be subsequently used to transfer the information related to the first terminal, for example, transfer the information related to the first terminal to a session management network element #1.

After a procedure in the manner 1 or a procedure in the manner 2, the user plane network element sends the first information to the session management network element, to indicate the session management network element to initiate an authentication procedure for the first terminal.

The first information may be first indication information, where the first indication information may indicate the session management network element to initiate the authentication procedure for the first terminal. For example, the first indication information is a new information element, for example, an information element including one or more bits. The session management network element is explicitly indicated, by using a specific value or a combination of values of these bits, to initiate the authentication procedure for the first terminal, so as to implement decoupling from an existing information element. This may enable a more flexible indication manner. Alternatively, the first information is identifier information of the first terminal, for example, the permanent identifier information of the first terminal or the temporary identity information of the first terminal. In other words, the user plane network element may transfer, as the first information, an identifier that is of the first terminal and that is received from the first terminal to the session management network element, to implicitly indicate to trigger the authentication procedure for the first terminal by using the identifier information of the first terminal, that is, by reusing the existing information element, thereby reducing indication overheads.

It should be understood that the foregoing is merely some example implementations of the first information, and the first information may be alternatively implemented in another manner. For example, the first information includes the first indication information and the identifier of the first terminal, to jointly indicate the session management network element to initiate the authentication procedure for the first terminal. In addition,

For example, after the procedure in the manner 1, the user plane network element may send the first information to the session management network element, and correspondingly, the session management network element receives the first information from the user plane network element. In this case, the first information may be carried in any possible message transferred between the user plane network element and the session management network element. For another example, after the procedure in the manner 2, the user plane network element transfers the first information through the N4 session, and correspondingly, the session management network element receives the first information transferred through the N4 session. In this case, the first information may be carried in any possible message that can be transferred through the N4 session, for example, a PFCP notification report message #1/PFCP session request message #1, or may be carried in any other possible message. A message name is not limited in this embodiment of this application.

After receiving the first information, the session management network element may trigger the authentication procedure for the first terminal based on the first information. Optionally, the session management network element may trigger the authentication procedure for the first terminal by using an authentication network element, or may trigger the authentication procedure for the first terminal by using a data management network element. Details are separately described below.

### Manner A:

The session management network element may send the identifier information of the first terminal to the authentication network element serving the first terminal. Details are described below.

The authentication network element serving the first terminal means that the authentication network element can provide an authentication service for the first terminal. For example, the session management network element may select, based on the identifier information of the first terminal, for example, the identifier information, of the first terminal, obtained from the user plane network element, the authentication network element that can provide the service for the first terminal. A specific selection manner is not limited in this embodiment of this application. The session management network element may send, to the authentication network element, an extensive authentication protocol (extensive authentication protocol, EAP) message #1 or an authentication request (Auth request) message #1 that carries the identifier information of the first terminal. For example, the identifier information of the first terminal is carried in the EAP message #1, and the EAP message #1 is carried in the authentication message #1; or the identifier information of the first terminal may be carried in any other possible message. A message name is not limited in this embodiment of this application.

The authentication network element may receive the identifier information of the first terminal from the session management network element, and obtain, based on the identifier information of the first terminal, an authentication vector of the first terminal from the data management network element serving the first terminal. Details are described below.

The data management network element serving the first terminal is a data management network element that stores subscription data of the first terminal. For example, the authentication network element can query for, based on the identifier information of the first terminal, for example, the identifier information, of the first terminal, obtained from the session management network element, the data management network element that stores the subscription data of the first terminal. A specific query manner is not limited in this embodiment of this application. The authentication network element may send the identifier information of the first terminal to the data management network element, to request the data management network element to provide authentication-related information of the first terminal. In this case, the identifier information of the first terminal may be carried in any possible message sent by the authentication network element to the data management network element. A message name is not limited in this embodiment of this application.

The data management network element may obtain the authentication vector, that is, a security parameter, which may be specifically 5G HE AV or EAP AKA' AV, of the first terminal from the subscription data of the first terminal based on the identifier information of the first terminal. The data management network element may send the authentication vector of the first terminal to the authentication network element, where the authentication vector may be carried in any possible message sent by the data management network element to the authentication network element. A message name is not limited in this embodiment of this application.

After receiving the authentication vector of the first terminal, the authentication network element performs authentication on the first terminal based on the authentication vector of the first terminal. Details are described below.

The authentication network element may send, to the first terminal, authentication information (denoted as authentication information #1) that is in the authentication vector and that is used by the terminal to perform authentication on a network. For example, the authentication network element may send, to the session management network element, an EAP message #2 (for example, an EAP request/challenge message) or an authentication message #2 that carries the authentication information #1. For example, the authentication information #1 is carried in the EAP message #2, and the EAP message #2 is carried in the authentication message #2; or the authentication information #1 may be carried in any other possible message. A message name is not limited in this embodiment of this application. In addition, for the authentication information #1, refer to the related descriptions of 5G AKK or EAP AKA'. Details are not described herein again.

After receiving the authentication information #1, the session management network element may send, to the user plane network element, any possible message that carries the authentication information #1, or the authentication information #1 may be transferred through the N4 session. For example, the authentication information #1 is carried in the EAP message #2, and the EAP message #2 is carried in a PFCP notification report message #2/PFCP session response message #1 of the N4 session; or the authentication information #1 may be carried in any other possible message. A message name is not limited in this embodiment of this application. Correspondingly, the user plane network element receives the authentication information #1 from the session management network element.

After receiving the authentication information #1, the user plane network element may send the authentication information #1 to the first terminal through the IPsec tunnel between the user plane network element and the first terminal. For example, the authentication information #1 is carried in the EAP message #2, and the EAP message #2 may be carried in an IKE authentication answer (IKEAUTH ANS) message #1; or the authentication information #1 may be carried in any other possible message. A message name is not limited in this embodiment of this application. Correspondingly, the first terminal receives the authentication information #1 from the user plane network element, and uses the authentication information #1 to perform authentication on the network. For specific implementation, refer to the related descriptions of the 5G AKK or EAP AKA'. Details are not described herein again.

### Manner B:

The session management network element may send the identifier information of the first terminal to the data management network element serving the first terminal. For example, the session management network element can query for, based on the identifier information of the first terminal, for example, the identifier information, of the first terminal, obtained from the session management network element, a data management network element that stores subscription data of the first terminal. A specific query manner is not limited in this embodiment of this application. The session management network element may send, to the data management network element, any possible message that carries the identifier information of the first terminal. A message name is not limited in this embodiment of this application.

The data management network element may receive the identifier information of the first terminal from the session management network element, and send, based on the identifier information of the first terminal, an authentication vector of the first terminal to the authentication network element serving the first terminal. Correspondingly, the authentication network element may receive the authentication vector of the first terminal from the data management network element, and perform authentication on the first terminal based on the authentication vector of the first terminal. For specific implementation, refer to the related descriptions of the manner A. Details are not described herein again.

It can be learned that the session management network element may trigger the authentication procedure for the first terminal by interacting with the authentication network element, or may trigger the authentication procedure for the first terminal by directly interacting with the data management network element. A specific implementation is not limited, and may be flexibly selected based on an actual situation.

### S403 and S404:

The session management network element may trigger the authentication on the first terminal based on authentication information #2. Details are described below.

When authentication performed by the first terminal on a network succeeds, the first terminal may return authentication information (denoted as the authentication information #2) of the first terminal for the network to perform authentication on the first terminal. For the authentication information #2, refer to the related descriptions of the 5G AKK or EAP AKA'. Details are not described herein again. The first terminal may send the authentication information #2 to the user plane network element through the IPsec tunnel between the first terminal and the user plane network element. For example, the authentication information #2 may be carried in an EAP message #3 (for example, an EAP request/challenge message), and the EAP message #3 may be carried in an IKE authentication request message #2; or the authentication information #2 may be carried in any other possible message. A message name is not limited in this embodiment of this application. Correspondingly, the user plane network element receives the authentication information #2 from the first terminal.

After receiving the authentication information #2, the user plane network element may send, to the session management network element, any possible message that carries the authentication information #2, or the authentication information #2 may be transferred through the N4 session. For example, the authentication information #2 is carried in an EAP message #3, and the EAP message #3 is carried in a PFCP notification report message #3/PFCP session request message #2 of the N4 session; or the authentication information #2 may be carried in any other possible message. A message name is not limited in this embodiment of this application. Correspondingly, the session management network element receives the authentication information #2 from the user plane network element.

After receiving the authentication information #2, the session management network element may send, to the authentication network element, the EAP message #3 or an authentication message #3 that carries the authentication information #2. For example, the authentication information #2 is carried in the EAP message #3, and the EAP message #3 is carried in the authentication message #3, or the authentication information #2 may be in any other possible message. A message name is not limited in this embodiment of this application. Correspondingly, the authentication network element receives the authentication information #2 from the session management network element, and performs authentication on the first terminal by using the authentication information #2. For specific implementation, refer to the related descriptions of the 5G AKK or EAP AKA'. Details are not described herein again.

The authentication network element sends at least one of authentication success information or a security key to the session management network element when the authentication performed by the authentication network element on the first terminal succeeds. Details are described below.

The authentication success information may be an EAP message #4, for example, an EAP success message, to indicate that the authentication on the first terminal succeeds.

The security key may be a key determined in the authentication procedure for the first terminal, and may be used to subsequently ensure security of user plane transmission. For example, when the authentication on the first terminal succeeds, the authentication network element may derive the security key based on a security vector of the first terminal. The security vector may be a security certificate, a public key, a private key, or the like of the first terminal, and is preconfigured in the subscription data of the first terminal. The security vector may be transferred to the authentication network element through the authentication vector of the first terminal, or may be separately sent by the data management network element to the authentication network element. A specific implementation is not limited.

The authentication network element may send, to the session management network element, an authentication message #4 that carries the at least one of the authentication success information or the security key. For example, the authentication success information is the EAP message #4. The security key may be carried in the EAP message #4, and the EAP message #4 is carried in the authentication message #4; or both the security key and the EAP message #4 are carried in the authentication message #4; or both the security key and the EAP message #4 may be in any other possible message. A message name is not limited in this embodiment of this application. Correspondingly, the session management network element receives the at least one of the authentication success information or the security key from the session management network element.

When the session management network element receives the at least one of the authentication success information or the security key, the session management network element may send the at least one of the authentication success information or the security key to the user plane network element. For example, the session management network element may send, to the user plane function, any possible message that carries the at least one of the authentication success information or the security key, or the at least one of the authentication success information or the security key may be transferred through the N4 session. For example, the EAP message #4 is used as an example. The security key may be carried in the EAP message #4, and the EAP message #4 is carried in a PFCP notification report message #4/PFCP session response message #2; or both the security key and the EAP message #4 may be carried in the PFCP notification report message #4/PFCP session response message #2; or both the security key and the EAP message #4 may be in any other possible message. A message name is not limited in this embodiment of this application. Correspondingly, the user plane network element may receive the at least one of the authentication success information or the security key from the session management network element.

It can be learned that, different from the conventional technology in which the authentication procedure for the first terminal is triggered by a NAS stratum (for example, an access and mobility management network element), in this embodiment of this application, the user plane network element may indicate the session management network element to trigger the authentication procedure for the first terminal, so that the authentication bypasses the NAS stratum, in other words, the NAS message may not be transferred. In this way, the terminal may not support transmission of the non-access stratum NAS message in N3G either, thereby implementing establishment of a user plane connection through non-3GPP access at lower costs.

S405:
The secure channel may be an IPsec secure channel, or may be any other possible secure channel. This is not specifically limited.

The user plane network element may determine, based on the at least one of the authentication success information or the security key, that the authentication on the first terminal succeeds. The user plane network element may establish the secure channel between the user plane network element and the first terminal by using the security key. For example, the first terminal may derive the security key based on the security vector of the first terminal. Therefore, when the user plane network element obtains the security key, both the first terminal and the user plane network element may use the security key for communication, which means that the IPsec secure channel is successfully established. Certainly, because the user plane network element establishes the secure channel to the first terminal only when determining that the authentication on the first terminal succeeds, a security risk caused by establishing the secure channel when the authentication on the first terminal fails is avoided.

In conclusion, after obtaining the information about the first terminal, the user plane network element may select the session management network element or select a session corresponding to the session management network element, so that the user plane network element and the session management network element transfer authentication information of the first terminal in authentication. Further, the user plane network element establishes the secure channel to the first terminal when the authentication on the first terminal succeeds. In other words, a user plane connection is directly established without using an N3G access gateway. In this way, the N3G access gateway may not be deployed in the network, and the terminal may not support the transmission of the non-access stratum NAS message in the N3G, so that the user plane connection through non-3GPP access can be established at lower costs.

In a first possible design solution, with reference to S401 to S405, the method further includes:
When the authentication procedure for the first terminal succeeds, the session management network element may further generate a session context of the first terminal based on session subscription information that is related to the service information of the first terminal and that is obtained from the data management network element.

The session subscription information may include one or more of the identifier information, the DNN, a PDU session type, a QoS parameter, a charging policy, and the like of the first terminal. The session context of the first terminal may include the session subscription information, and may further include some other information. For details, refer to the conventional technology. This is not limited. The session context of the first terminal is used to manage a session of the first terminal, for example, a PDU session. The session of the first terminal may be carried by the secure channel. In this way, session management in the non-3GPP access is implemented, thereby ensuring service reliability.

For example, the user plane network element may further send the service information of the first terminal, for example, the DNN and/or the slice information, to the session management network element. The service information of the first terminal and the first information may be carried in a same message, for example, included in the first information; or the service information of the first terminal and the first information may be separately transferred. In this case, a transfer manner of the service information of the first terminal is similar to that of the first information and can be understood by referring to the latter. Details are not described herein again. Correspondingly, the session management network element receives the service information of the first terminal from the user plane network element.

The session management network element may further send the service information of the first terminal and an identifier of the session management network element to the authentication network element. The authentication network element receives the service information of the first terminal and the identifier of the session management network element from the session management network element, and sends the service information of the first terminal and the identifier of the session management network element to the data management network element. A transfer manner is similar to that of the identifier information of the first terminal and can be understood by referring to the latter. Details are not described herein again. Alternatively, the session management network element may directly send the service information of the first terminal and the identifier of the session management network element to the data management network element.

When receiving the service information of the first terminal, the data management network element may further obtain, from the subscription data of the first terminal based on the service information of the first terminal, the session subscription information related to the service information of the first terminal (for example, the DNN and/or the slice information), that is, the one or more of the identifier information, the DNN, the PDU session type, the QoS parameter, the charging policy, and the like of the first terminal. In addition, the data management network element may further store the identifier of the session management network element. When the authentication on the first terminal succeeds, the data management network element may send the session subscription information to the session management network element based on the identifier of the session management network element. In this case, the session subscription information may be carried in any possible message sent by the data management network element to the session management network element. A message name is not limited in this embodiment of this application. The successful authentication on the first terminal may be notified by the authentication network element to the data management network element, or the data management network element may subscribe to the authentication network element for the successful authentication on the first terminal. A specific implementation is not limited. Correspondingly, the session management network element may determine, based on the at least one of the authentication success information or the security key, that the authentication on the first terminal succeeds. Therefore, the session management network element may generate the session context of the first terminal based on the session subscription information.

In a second possible design solution, with reference to S401 to S405, the method further includes:
When the authentication procedure for the first terminal succeeds, the data management network element may further send, to the session management network element, an identifier of an access and mobility management network element serving the first terminal. The access and mobility management network element may be an access and mobility management network element with which the first terminal is registered in a network when the first terminal performs 3GPP access in advance. In this case, the identifier of the access and mobility management network element may be stored in the subscription data of the first terminal. In this way, when the authentication procedure for the first terminal succeeds, the data management network element may subsequently obtain the identifier of the access and mobility management network element from the subscription data of the first terminal, and send the identifier of the access and mobility management network element to the session management network element by using any possible message exchanged between the data management network element and the session management network element. Correspondingly, the session management network element may receive the identifier of the access and mobility management network element from the data management network element.

When receiving the identifier of the access and mobility management network element, the session management network element may send at least one of the identifier information of the first terminal or mobility management information of the first terminal to the access and mobility management network element based on the identifier of the access and mobility management network element.

The mobility management information of the first terminal may indicate at least one of the following: An access type of the first terminal is non-3GPP access, or a status of the first terminal is a connected state or an active state. For example, the mobility management information of the first terminal may include access type indication information, where the access type indication information may be an information element including one or more bits, so as to indicate, by using a combination of bit values and the identifier information of the first terminal, whether the access type of the first terminal is 3GPP access or non-3GPP access. In the non-3GPP access, an access type may further specifically indicate that a WLAN access technology, a trusted/untrusted WLAN access technology, a wired access technology, or the like is used. The mobility management information of the first terminal may include status indication information, where the status indication information may also be an information element including one or more bits, so as to indicate, by using a combination of bit values and the identifier information of the first terminal, that the status of the first terminal is the connected state or the active state. The connected state of the first terminal indicates that the first terminal establishes a connection to the network, but the network cannot transmit the user plane data of the first terminal. In other words, the user plane data of the first terminal can be truncated or discarded by the user plane network element. The active state of the first terminal indicates that the network can transmit the user plane data of the first terminal. In other words, the user plane data of the first terminal can be transferred by the user plane network element to the first terminal or the data network.

It can be learned that, in the non-3GPP access, the network (for example, the access and mobility management network element) may track and manage the status of the first terminal, and provide the user plane data of a service for the first terminal only when the first terminal is in the active state. This can avoid redundant transmission, and can also ensure data security.

The session management network element may send the at least one of the identifier information of the first terminal or the mobility management information of the first terminal to the access and mobility management network element by using any possible message exchanged between the session management network element and the access and mobility management network element. Correspondingly, the access and mobility management network element may receive the at least one of the identifier information of the first terminal or the mobility management information of the first terminal from the session management network element. The access and mobility management network element may store, in the context of the first terminal, the mobility management information of the first terminal based on the identifier information of the first terminal, to track and manage the connected state of the first terminal in real time.

In a third possible design solution, with reference to the foregoing S401 to S405, the method further includes:
When the authentication procedure for the first terminal succeeds, the data management network element may directly send at least one of the identifier information of the first terminal or mobility management information of the first terminal to an access and mobility management network element serving the first terminal. For specific implementation, refer to the related descriptions of the second possible design solution. Details are not described herein again. In addition, the data management network element may further send an identifier of the session management network element to the access and mobility management network element for storage.

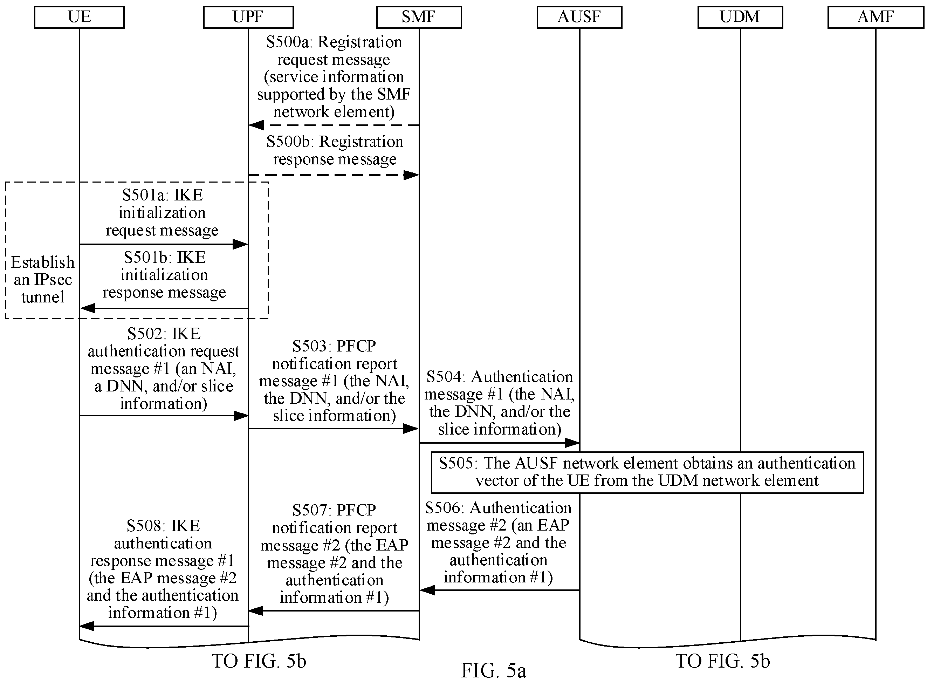

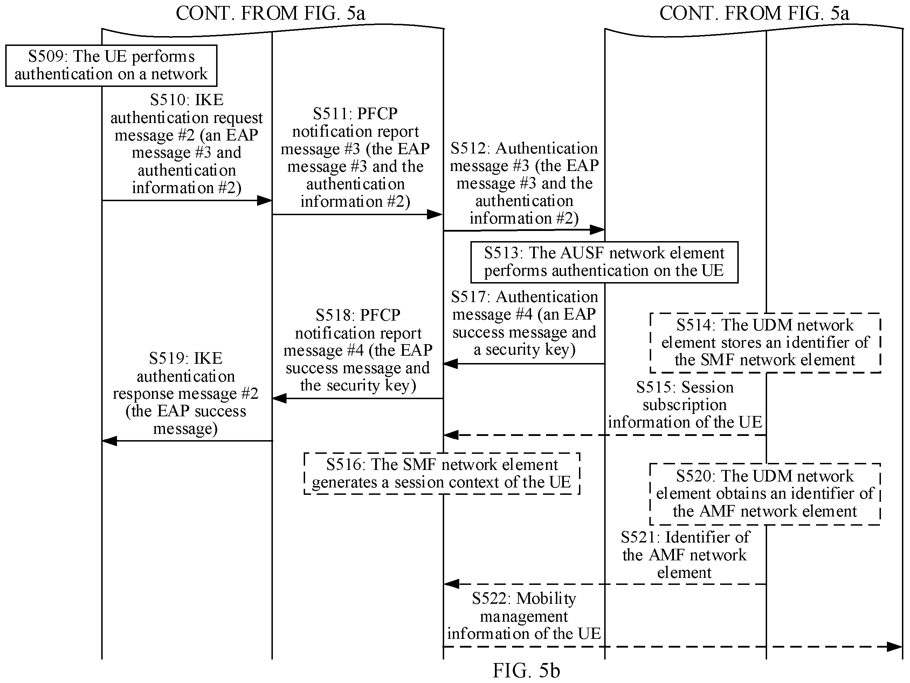

With reference to FIG. 4, the foregoing describes a sorting procedure of the communication method provided in embodiments of this application. With reference to FIG. 5a and FIG. 5b to FIG. 7a and FIG. 7b, the following describes in detail specific procedures of the communication method provided in embodiments of this application in specific scenarios.

### Scenario 1:

FIG. 5a and FIG. 5b are a schematic flowchart 2 of a communication method according to an embodiment of this application. The communication method is applicable to the foregoing communication system, and mainly relates to interaction between UE (the foregoing first terminal), a UPF network element (the foregoing user plane network element), an SMF network element (the foregoing session management network element), an AUSF network element (the foregoing authentication network element)/a UDM network element (the foregoing data management network element), and the like.

In the scenario 1, the UE may be used as an xdevice, in other words, the UE and the xdevice are a same device. The UE may configure/obtain an IP address of the UPF network element in advance. In this way, when accessing a 5GC through non-3GPP access, the UE does not need to perform NAS interaction, and may directly communicate with the UPF network element by using the IP address of the UPF network element. The UPF network element indicates the SMF network element to trigger the AUSF network element to perform authentication on the UE, so as to establish a secure channel between the UE and the UPF network element through authentication. In this way, not only network deployment costs can be reduced, that is, a non-3GPP access gateway does not need to be deployed on a network side, but also implementation costs of the UE can be reduced, that is, the UE does not need to support NAS transmission in the N3G, thereby facilitating commercial use of a feature of non-3GPP access to the 5GC on a live network.

Specifically, as shown in FIG. 5a and FIG. 5b, a procedure of the communication method is shown below.

S500a: The SMF network element sends a registration request message to the UPF network element.

The registration request message may include an identifier of the SMF network element and service information supported by the SMF network element, for example, a DNN and/or slice information. The UPF network element may locally store, based on the registration request message, the identifier of the SMF network element and the service information supported by the SMF network element in the UPF network element, so that the SMF network element is registered with the UPF network element.

S500b: The UPF network element sends a registration response message to the SMF network element.

The registration response message may indicate that the SMF network element is successfully registered with the UPF network element or fails to be registered with the UPF network element.

It may be understood that S500a and S500b may be separately performed by different SMF network elements. In other words, a plurality of SMF network elements may be registered with the UPF network element. In addition, S500a and S500b are optional steps. For example, the UPF network element may also preconfigure an identifier of each SMF network element and service information supported by each SMF network element. Certainly, for S500a and S500b, refer to the related descriptions of S402. Details are not described herein again.

S501a: The UE sends an IKE initialization request message to the UPF network element.

S501b: The UPF network element sends an IKE initialization response message to the UE.

S501a and S501b are used for establishing an IPsec tunnel between the UE and the UPF network element. For specific implementation, refer to the related descriptions of S401. Details are not described herein again.

S502: The UE sends an IKE authentication request message #1 to the UPF network element.

The IKE authentication request message #1 is carried in the IPsec tunnel, and may include an NAI of the UE, and optionally, may further include at least one of a DNN or slice information of the UE. The NAI may be used to identify the UE, for example, include at least one of a permanent identifier (for example, a SUPI or a SUCI), a device identifier (for example, an IMEI, a MAC address, or another hardware device identifier), or a temporary identity (for example, a 5G-GUTI or another temporary identity) of the UE.

On this basis, the UPF network element may select, based on the DNN and/or the slice information provided by the UE, an SMF network element that supports the DNN and/or the slice information. Alternatively, if the UE does not provide the DNN and/or the slice information, the UPF network element may select, based on a locally preconfigured DNN and/or locally preconfigured slice information, an SMF network element that supports the DNN and/or the slice information. For specific implementation, refer to the related descriptions of the manner 1 in S402. Details are not described herein again.

S503: The UPF network element sends a PFCP notification report message #1 to the SMF network element.

The PFCP notification report message #1 may include the NAI of the UE, to indicate the SMF network element to initiate authentication on the UE. Optionally, the PFCP notification report message #1 may further include the at least one of the DNN or the slice information of the UE. For specific implementation, refer to the related descriptions in the manner 1 and the manner 2 in S402. Details are not described herein again.

S504: The SMF network element sends an authentication message #1 to the AUSF network element.

The authentication message #1 may include an EAP message #1, and the EAP message #1 may include the NAI of the UE. Optionally, the identifier of the SMF network element and the at least one of the DNN or the slice information of the UE may also be carried in the EAP message #1 or the authentication message #1. For specific implementation, refer to the related descriptions of the manner A in S402. Details are not described herein again.

S505: The AUSF network element obtains an authentication vector of the UE from the UDM network element.

The authentication vector of the UE is the authentication vector of the first terminal. For specific implementation of S505, refer to the related descriptions of the manner A in S402. Details are not described herein again.

S506: The AUSF network element sends an authentication message #2 to the SMF network element.

The authentication message #2 may include an EAP message #2, and the EAP message #2 may include authentication information of the UE, that is, the foregoing authentication information #1. For specific implementation, refer to the related descriptions of the manner A in S402, and details are not described herein again.

S507: The SMF network element sends a PFCP notification report message #2 to the UPF network element.

The PFCP notification report message # may include the EAP message #2, and the EAP message #2 may include the authentication information #1 of the UE. For specific implementation, refer to the related descriptions of the manner A in S402. Details are not described herein again.

S508: The UPF network element sends an IKE authentication response message #1 to the UE.

The IKE authentication response message #1 is a response message of the IKE authentication request message #1, the IKE authentication response message may include the EAP message #2, and the EAP message #2 may include the authentication information of the UE, that is, the foregoing authentication information #1. For specific implementation, refer to the related descriptions of manner A in S402, and details are not described herein again.

S509: The UE performs authentication on a network.

The UE may use the received authentication information #1 to perform authentication on the network. For specific implementation, refer to the related descriptions of S403. Details are not described herein again.

S510: The UE sends an IKE authentication request message #2 to the UPF network element.

The IKE authentication request message #2 is carried in the IPsec tunnel, and may include authentication information of the UE, that is, the foregoing authentication information #2. For example, the IKE authentication request message #2 includes an EAP message #3, and the EAP message #3 may include the authentication information #2, to request the network to perform authentication on the UE. For specific implementation, refer to the related descriptions of S403. Details are not described herein again.

S511: The UPF network element sends a PFCP notification report message #3 to the SMF network element.

The PFCP notification report message #3 may include the authentication information #2. For example, the PFCP notification report message #3 includes the EAP message #3, and the EAP message #3 may include the authentication information #2. For specific implementation, still refer to the related descriptions of S403. Details are not described herein again.

S512: The SMF network element sends an authentication message #3 to the AUSF network element.

The authentication message #3 may include the EAP message #3, and the EAP message #3 may include the authentication information #2. For specific implementation, refer to the related descriptions of S403. Details are not described herein again.

S513: The AUSF network element performs authentication on the UE.

The AUSF network element may use the received authentication information #2 to perform authentication on the UE. For specific implementation, refer to the related descriptions of S403. Details are not described herein again.

S514: The UDM network element stores the identifier of the SMF network element.

S513 is an optional step. When the UDM network element learns that the authentication on the UE succeeds, S513 is performed; or otherwise, if the UDM network element learns that the authentication on the UE fails, the UDM network element may release the identifier of the SMF network element that is received in advance.

S515: The UDM network element sends session subscription information of the UE to the SMF network element.

S516: The SMF network element generates a session context of the UE.

The UDM network element may send the session subscription information of the UE to the SMF network element based on the identifier of the SMF network element stored in S514, so that the SMF network element generates the session context of the UE based on the session subscription information. For specific implementation, refer to the related descriptions of the first possible design solution. Details are not described herein again.

It may be further understood that a trigger occasion of S515 is not limited in this embodiment of this application, and the UDM network element may trigger S515 at any possible occasion after the authentication on the UE succeeds. This is not specifically limited.

S517: The AUSF network element sends an authentication message #4 to the SMF network element.

S518: The SMF network element sends a PFCP notification report message #4 to the UPF network element.

The authentication message #4 and the PFCP notification report message #4 may include an EAP success message and a security key of the UE. For specific implementation, refer to the related descriptions of S404. Details are not described herein again.

In addition, a sequence of performing S514 to S516 and S517 is not limited.

S519: The UPF network element sends an IKE authentication response message #2 to the UE.

The IKE authentication response message #2 is a response message of the IKE authentication request message #2, and the IKE authentication response message may include an EAP success message, to notify the UE that the authentication on the UE succeeds. In this way, the UE may establish an IPsec secure connection to the UPF network element by using the security key. For specific implementation, refer to the related descriptions of S405. Details are not described herein again.

S520: The UDM network element obtains an identifier of an AMF network element.

S521: The UDM network element sends the identifier of the AMF network element to the SMF network element.

S522: The SMF network element sends mobility management information of the UE to the AMF network element.

The AMF network element is an AMF network element with which the UE is registered when the UE performs 3GPP access. For specific implementation of S520 to S522, refer to the related descriptions of the second possible design solution. Details are not described herein again. Certainly, S520 to S522 are optional steps. For example, S520 to S522 may be replaced with that the UDM network element may directly send the mobility management information of the UE to the AMF network element. For specific implementation, refer to the related descriptions of the third possible design solution. Details are not described herein again.

### Scenario 2:

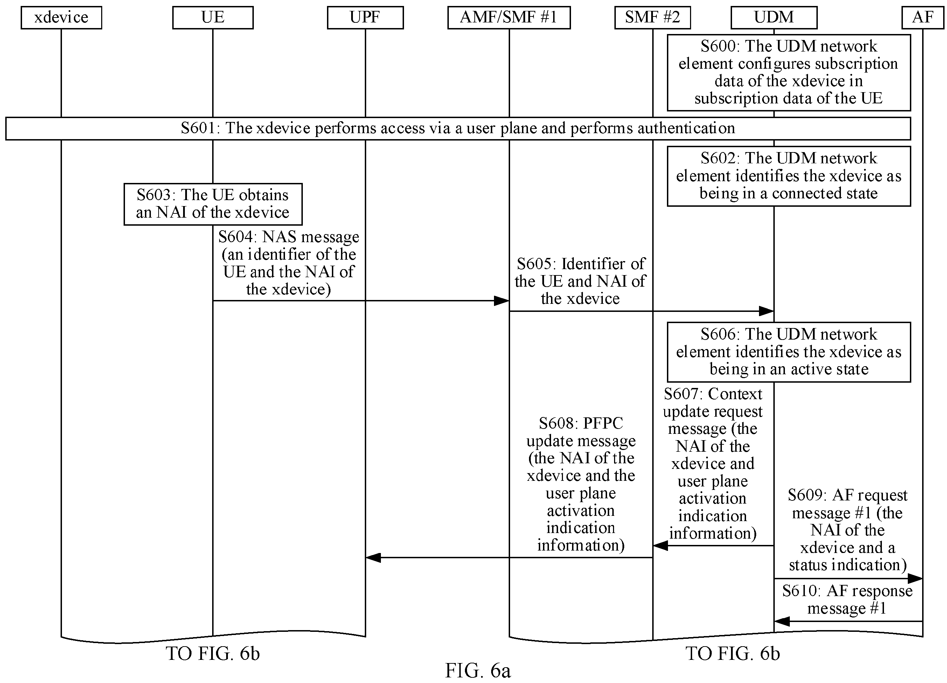

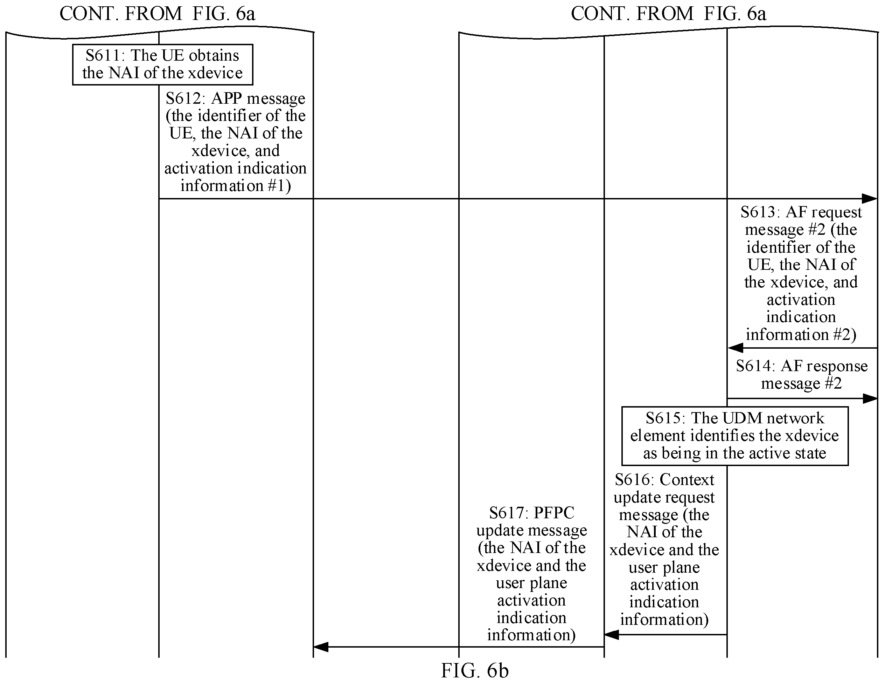

FIG. 6a and FIG. 6b are a schematic flowchart 3 of a communication method according to an embodiment of this application. The communication method is applicable to the foregoing communication system, and mainly relates to interaction between UE, an xdevice, a UPF network element, an SMF network element, an AUSF network element/a UDM network element, and the like.

In the scenario 2, the UE and the xdevice are different devices. The xdevice may configure/obtain an IP address of the UPF network element in advance. In this way, when accessing a 5GC through non-3GPP access, the xdevice does not need to perform NAS interaction, and may directly communicate with the UPF network element by using the IP address of the UPF network element. The UPF network element indicates the SMF network element to trigger the AUSF network element to perform authentication on the xdevice, so as to establish a secure channel between the xdevice and the UPF network element through authentication. In this case, the xdevice cannot transfer user plane data through the secure channel. Then, if the UE indicates that a network allows transmission of the user plane data of the xdevice, the xdevice may transfer the user plane data of the xdevice through the secure channel between the xdevice and the UPF network element.

Specifically, as shown in FIG. 6a and FIG. 6b, a procedure of the communication method is shown below.

S600: The UDM network element configures subscription data of the xdevice in subscription data of the UE.

For example, in the subscription data of the UE, an identifier of the UE, for example, a SUPI, may be used as an index to associate the SUPI of the UE with the subscription data of the xdevice. Specifically, the SUPI of the UE may be associated with a user identifier (User ID) of the xdevice in the subscription data of the xdevice, that is, identifier information of a user that uses the xdevice, such as a user name, an account, a password, or any other possible identifier. This is not specifically limited. The user identifier of the xdevice may be associated with other data in the subscription data of the xdevice, for example, a device identifier of the xdevice, which is used to identify the xdevice, an access technology indication (for example, non-3GPP access and/or 3GPP access), an authentication vector, a PDU session type, a DNN, a QoS parameter, and a charging policy.

It may be understood that the user identifier of the xdevice and/or the device identifier of the xdevice may be uniformly expressed as an NAI of the xdevice. The NAI of the xdevice mentioned below may be understood as the user identifier of the xdevice and/or the device identifier of the xdevice unless otherwise specified.

The preceding parameters indicate subscription data corresponding to the user ID when the xdevice accesses the 5GC.

S601: The xdevice performs access via a user plane and performs authentication.

It may be understood that S601 represents execution of S500a to S522. In other words, the UE in FIG. 5a and FIG. 5b is replaced with the xdevice in FIG. 6a and FIG. 6b, and the subscription data of the UE is replaced with the subscription data of the xdevice. For details, refer to the related descriptions of FIG. 5a and FIG. 5b. Details are not described again.

S602: The UDM network element identifies the xdevice as being in a connected state.

The UDM network element may identify the xdevice as being in the connected state in the subscription data of the xdevice.

The connected state indicates that the xdevice establishes a connection to the network, but the network cannot transmit user plane data of the xdevice. In other words, the user plane data of the xdevice can be truncated or discarded by the UPF network element. For details, refer to the related descriptions of the second possible design solution. Details are not described herein again.

Then, the UE may activate the xdevice on a network side. This may be separately implemented in two manners: S603 to S608 and S609 to S617, which are separately described below.

S603: The UE obtains the NAI of the xdevice.

How the UE obtains the NAI of the xdevice is not limited in this embodiment of this application. For example, the UE may obtain the NAI of the xdevice by scanning a two-dimensional code of the device, or the user may directly enter the NAI of the xdevice, for example, the user name, the account, and the password, on the UE.

S604: The UE sends a NAS message to an AMF network element.

The AMF network element is an AMF network element serving the UE. The NAS message carries the identifier of the UE and the NAI of the xdevice, to indicate that the network needs to activate the xdevice. The NAS message may be specifically an uplink NAS transport (UL NAS transport) message, or may be any possible NAS message. This is not specifically limited.

S605: The AMF network element sends the identifier of the UE and the NAI of the xdevice to the UDM network element.

The identifier of the UE and the NAI of the xdevice may be carried in any possible message sent by the AMF network element to the UDM network element. This is not specifically limited.

It may be understood that S604 and S605 are an implementation, and the NAI of the xdevice may also be transferred to the UDM network element via an SMF network element #1. For example, the SMF network element #1 is an SMF network element serving the UE. The UE sends, to the SMF network element, a PDU session establishment or update request message that carries the identifier of the UE and the NAI of the xdevice. The PDU session establishment or update request message may be first transferred to the AMF network element through the NAS message, and the AMF network element sends the PDU session establishment or update request message to the SMF network element #1. Then, the SMF network element #1 sends the identifier of the UE and the NAI of the xdevice to the UDM network element.

S606: The UDM network element identifies the xdevice as being in an active state.

The active state indicates that the xdevice establishes a connection to the network, and the network can transmit the user plane data of the xdevice. For details, refer to the related descriptions of the second possible design solution. Details are not described herein again.

The UDM network element may query for the subscription data of the UE based on the identifier of the UE obtained from the AMF network element or the SMF network element #1, and further query for the subscription data of the xdevice from the subscription data of the UE based on the NAI of the xdevice obtained from the AMF network element or the SMF network element #1. In this way, the UDM network element may determine, based on the NAI of the xdevice provided by the UE, that the xdevice needs to be activated, so that the UDM network element identifies the xdevice as being in the active state in the subscription data of the xdevice, and a subsequent service can be performed.

S607: The UDM network element sends a session context update request (Update SM context) message to an SMF network element #2.

The SMF network element #2 is an SMF network element serving the xdevice. The context update request message carries the NAI of the xdevice, and optionally, may further carry user plane activation indication information. The user plane activation indication information may indicate that the user plane data of the xdevice can be transmitted. The UDM network element may obtain an identifier of the SMF network element #2 from the subscription data of the xdevice, so as to send the session context update request message to the SMF network element #2.

S608: The SMF network element #2 sends a PFPC update message to the UPF network element.

The PFPC update message carries the NAI of the xdevice, and optionally, may further carry the user plane activation indication information.

The SMF network element #2 may search for a session context of the xdevice based on the received NAI of the xdevice, and determine a UPF network element connected to the xdevice, to send the PFPC update message to the UPF network element. In this case, the UPF network element may determine, based on the NAI of the xdevice and the user plane activation indication information, that the xdevice is activated, and permit a service data packet of the xdevice, that is, the user plane data, to pass. For example, the UPF network element may forward a data packet of the xdevice to another UPF network element/xdevice, or send the data packet of the xdevice to the DN through an N6 interface. In other words, when the xdevice is not successfully activated, for example, when the UPF network element establishes the secure channel to the xdevice, the UPF network element does not forward a service data packet of the xdevice, and even if the UPF network element receives the data packet, the UPF network element stores or discards the data packet.

Optionally, the user plane activation indication information is optional. For example, the UPF network element may activate the xdevice by default based on the NAI of the xdevice received from the SMF network element #2.

S609: The UDM network element sends an AF request message #1 to an AF.

The AF request message #1 may carry the NAI of the xdevice and information (denoted as a status indication) indicating that a status of the device is the connected state, which jointly indicate that the status of the xdevice is the connected state. The AF may identify the status of the xdevice as the connected state based on the AF request message #1. The UDM network element may directly send the AF request message #1 to the AF, or may send the AF request message #1 to the AF via an NEF network element.

It may be understood that the AF request message #1 is an example name, and may also be replaced with any possible message.

S610: The AF sends an AF response message #1 to the UDM network element.

The AF response message #1 may respond to the AF request message #1, indicating that the AF has successfully stored the status of the xdevice.

It may be understood that the AF response message #1 is an example name, and may also be replaced with any possible message.

S611: The UE obtains the NAI of the xdevice.

How the UE obtains the NAI of the xdevice is not limited in this embodiment of this application. For example, the UE may obtain the NAI of the xdevice by scanning a two-dimensional code of the device, or the user may directly enter the NAI of the xdevice, for example, the user name, the account, and the password, on the UE.

S612: The UE sends an APP message to the AF.

The AF is an AF serving the xdevice, for example, an AF related to a service of the xdevice, in other words, an AF providing the service of the xdevice.

The APP message carries an identifier of the UE (for example, an external identifier of the UE like a generic public subscription identifier (generic public subscription identifier, GPSI), which may be specifically a phone number of the UE like a mobile station international ISDN number (mobile station international ISDN number, MSISDN)), the NAI of the xdevice, and activation indication information #1. The activation indication information #1 may indicate an active state. In other words, the AF may identify the state of the xdevice as the active state based on the NAI of the xdevice and the activation indication information #1.

S613: The AF sends an AF request message #2 to the UDM network element.

The AF request message #2 may include the identifier of the UE, the NAI of the xdevice, and activation indication information #2. The activation indication information #2 may indicate the active state, and may be an information element with a same function as the activation indication information #2.

S614: The UDM network element sends an AF response message #2 to the AF.

The AF response message #2 may respond to the AF request message #2, indicating that the UDM network element has successfully stored the status of the xdevice.

It may be understood that the AF response message #2 is an example name, and may also be replaced with any possible message.

S615: The UDM network element identifies the xdevice as being in the active state.

The UDM network element may query for the subscription data of the UE based on the identifier of the UE in the AF request message #2, further query for the subscription data of the xdevice from the subscription data of the UE based on the NAI of the xdevice in the AF request message #2, and determine, based on the activation indication information #2 in the AF request message #2, that the xdevice needs to be activated, so that the UDM network element identifies the xdevice as being in the active state in the subscription data of the xdevice, and a subsequent service can be performed.

It may be understood that the AF response message #2 is an example name, and may also be replaced with any possible message.

S616: The UDM network element sends a session context update request message to an SMF network element #2.

S617: The SMF network element #2 sends a PFPC update message to the UPF network element.

For S616 and S617, refer to the related descriptions of S607 and S608. Details are not described herein again.

It may be understood that S600 to S617 may also be summarized as the following procedure:
When an authentication procedure for a first terminal (the xdevice) succeeds, a data management network element (the UDM network element) adjusts a status of the first terminal to a connected state.

The data management network element may receive an identifier (the NAI) of the first terminal sent by a second terminal (the UE). The data management network element may determine, based on the identifier of the first terminal, whether subscription data of the second terminal includes subscription data of the first terminal. If the subscription data of the second terminal includes the subscription data of the first terminal, the data management network element adjusts the status of the first terminal to an active state. The data management network element may send user plane activation indication information to a session management network element (the SMF network element #2). The session management network element may receive the user plane activation indication information from the data management network element. The session management network element may send the user plane activation indication information to a user plane network element (the UPF network element). The user plane network element may receive the user plane activation indication information from the session management network element. In response to the user plane activation indication information, the user plane network element may transmit user plane data of the first terminal over a user plane secure connection.

Optionally, the data management network element receives, from an access and mobility management network element (an AMF network element #1) or an application function (the AF) serving the second terminal, the identifier of the first terminal sent by the second terminal.

### Scenario 3:

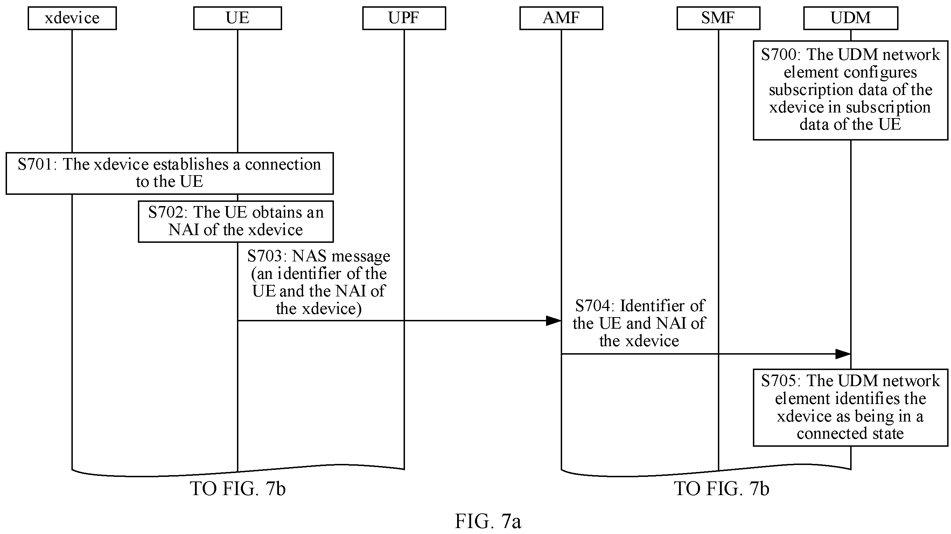

FIG. 7a and FIG. 7b are a schematic flowchart 4 of a communication method according to an embodiment of this application. The communication method is applicable to the foregoing communication system, and mainly relates to interaction between UE, an xdevice, a UPF network element, an SMF network element, an AUSF network element/a UDM network element, and the like.

In the scenario 3, the UE and the xdevice are different devices. The xdevice may configure/obtain an IP address of the UPF network element and a security vector in advance from the UE. In this way, when accessing a 5GC through non-3GPP access, the xdevice does not need to perform NAS interaction, and may directly communicate with the UPF network element by using the IP address of the UPF network element. The UPF network element indicates the SMF network element to trigger the AUSF network element to perform authentication on the xdevice. In this case, the xdevice may perform authentication by using the security vector obtained from the UE in advance, so as to establish a secure channel between the xdevice and the UPF network element through authentication.

Specifically, as shown in FIG. 7a and FIG. 7b, a procedure of the communication method is shown below.

S700: The UDM network element configures subscription data of the xdevice in subscription data of the UE.

For specific implementation of S700, refer to the related descriptions of S600. Details are not described herein again.

S701: The xdevice establishes a connection to the UE.

The xdevice may establish the connection to the UE by using a WLAN access technology or in a wired direct connection manner. This is not limited in this application.

S702: The UE obtains an NAI of the xdevice.

How the UE obtains the NAI of the xdevice is not limited in this embodiment of this application. For example, the UE may obtain the NAI of the xdevice by scanning a two-dimensional code of the device, or a user may directly enter the NAI of the xdevice, for example, a user name, an account, and a password, on the UE, or the UE may obtain the NAI of the xdevice over the connection to the xdevice. Alternatively, the NAI of the xdevice may be preconfigured in the UE.

S703: The UE sends a NAS message to an AMF network element.

S704: The AMF network element sends an identifier of the UE and the NAI of the xdevice to the UDM network element.

For specific implementation of S703 and S704, refer to the related descriptions of S604 and S605. Details are not described herein again.

S705: The UDM network element identifies the xdevice as being in a connected state.

The UDM network element may query for subscription data of the UE based on the obtained identifier of the UE, and further query for subscription data of the xdevice from the subscription data of the UE based on the NAI of the xdevice obtained from the AMF network element or the SMF network element #1. In this way, the UDM network element may determine, based on the NAI of the xdevice provided by the UE, that the xdevice is connected to the UE, so that the UDM network element identifies the xdevice as being in the connected state in the subscription data of the xdevice, indicating that the xdevice is connected to the 5GC via the UE.

It may be understood that the following S706 and S707, and S708 to S710 may have an "or" relationship. In other words, the UDM network element may send information about the UPF network element and/or configuration information of the xdevice to the UE via a control plane or a user plane respectively. Details are described below.

S706: The UDM network element sends the information about the UPF network element and/or the configuration information of the xdevice to the AMF network element.

The information about the UPF network element may include at least one of information such as a fully qualified domain name (fully qualified domain name, FQDN) of the UPF network element, an IP address of the UPF network element, or an identifier of the UPF network element. The configuration information of the xdevice may include at least one of information such as the NAI or the security vector of the xdevice. The UDM network element may obtain the information about the UPF network element and the configuration information of the xdevice by querying the subscription data of the xdevice.

The UDM network element may directly send the information about the UPF network element and/or the configuration information of the xdevice to the AMF network element, or the UDM network element may first send the information about the UPF network element and/or the configuration information of the xdevice to the SMF network element, and the SMF network element forwards the information about the UPF network element and/or the configuration information of the xdevice to the AMF network element. The information about the UPF network element and/or the configuration information of the xdevice may be carried in a message corresponding to the information about the UPF network element and/or the configuration information of the xdevice. This is not specifically limited.

S707: The AMF network element sends a NAS message to the UE.

The NAS message may be any possible NAS message, and carries the information about the UPF network element and/or the configuration information of the xdevice.

S708: The UDM network element sends the information about the UPF network element and/or the configuration information of the xdevice to the SMF network element.

The information about the UPF network element and/or the configuration information of the xdevice that are/is sent by the UDM network element to the SMF network element may be carried in any possible message sent by the UDM network element to the SMF network element. This is not specifically limited.

S709: The SMF network element sends the information about the UPF network element and/or the configuration information of the xdevice to the UPF network element.

The information about the UPF network element and/or the configuration information of the xdevice that are/is sent by the SMF network element to the UPF network element may be carried in any possible message sent by the SMF network element to the UPF network element. This is not specifically limited.

S710: The UPF network element sends the information about the UPF network element and/or the configuration information of the xdevice to the UE.

The UPF network element may send a PMF message to the UE through a PDU session user plane channel of the UE. The PMF message includes at least one of the information about the UPF network element or the configuration information of the xdevice.

S711: The UE sends the information about the UPF network element and/or the configuration information of the xdevice to the xdevice.

The UE may send the at least one of the information about the UPF network element or the configuration information of the xdevice to the xdevice over the connection to the xdevice.

S712: The xdevice performs access via a user plane and performs authentication.

It may be understood that S712 represents execution of S500a to S522. In other words, the UE in FIG. 5a and FIG. 5b is replaced with the xdevice in FIG. 7a and FIG. 7b, and the subscription data of the UE is replaced with the subscription data of the xdevice. For details, refer to the related descriptions of FIG. 7a and FIG. 7b. Details are not described again.

Then, the UDM network element may identify the xdevice as being in an active state, and indicate the UPF network element that the xdevice is in the active state. For details, refer to the related descriptions of S606 to S608. Details are not described herein again.

It may be understood that S700 to S712 may also be summarized as the following procedure:

A data management network element (the UDM network element) may receive an identifier (the NAI) of a first terminal (the xdevice) sent by a second terminal (the UE). The data management network element may send at least one of a security vector (the configuration information of the xdevice) of the first terminal or an address of a user plane network element (the information about the UPF network element) to the second terminal based on the identifier of the first terminal.

For example, the data management network element may receive, from an access and mobility management network element (the AMF network element) serving the second terminal, the identifier of the first terminal sent by the second terminal. The data management network element may determine, based on the identifier of the first terminal, whether subscription data of the second terminal includes subscription data of the first terminal. If the subscription data of the second terminal includes the subscription data of the first terminal, the data management network element obtains the at least one of the security vector or the address of the user plane network element from the subscription data of the first terminal. The data management network element may send the at least one of the security vector or the address of the user plane network element to the second terminal. For example, the data management network element may send the at least one of the security vector or the address of the user plane network element to the second terminal via the access and mobility management network element; or the data management network element may send the at least one of the security vector or the address of the user plane network element to the second terminal via the user plane network element (the UPF network element).

Optionally, in response to the received identifier of the first terminal sent by the second terminal, the data management network element adjusts a status of the first terminal to the connected state.

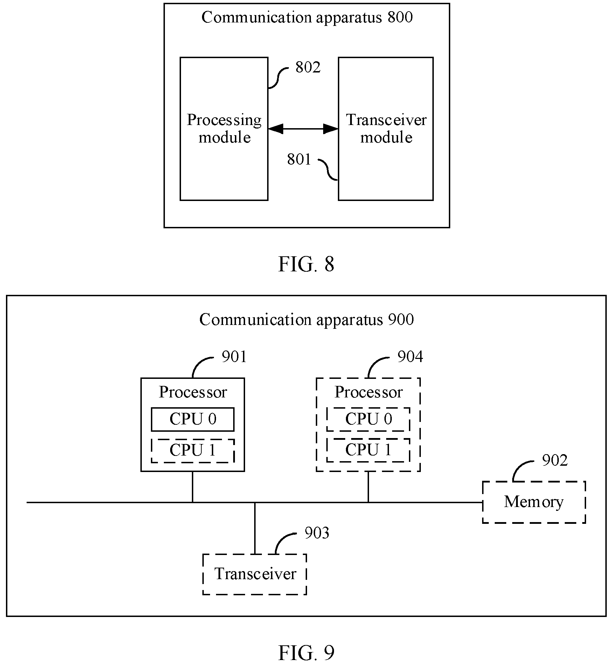

With reference to FIG. 4 to FIG. 7a and FIG. 7b, the foregoing describes in detail the communication method provided in embodiments of this application. With reference to FIG. 8 and FIG. 9, the following describes in detail communication apparatuses configured to perform the communication method provided in embodiments of this application.

FIG. 8 is a diagram 1 of a structure of a communication apparatus according to an embodiment of this application. For example, as shown in FIG. 8, the communication apparatus 800 includes a transceiver module 801 and a processing module 802. For ease of description, FIG. 8 shows only main parts of the communication apparatus.

The communication apparatus 800 may be applicable to the communication method in FIG. 4 to FIG. 7a and FIG. 7b, to implement corresponding functions. For example, the transceiver module 801 may implement receiving and sending functions in the communication method in FIG. 4 to FIG. 7a and FIG. 7b, and the processing module 802 may implement other functions in the communication method in FIG. 5a and FIG. 5b to FIG. 7a and FIG. 7b other than the receiving and sending functions.

Optionally, the transceiver module 801 may include a sending module (not shown in FIG. 8) and a receiving module (not shown in FIG. 8). The sending module is configured to implement a sending function of the communication apparatus 800, and the receiving module is configured to implement a receiving function of the communication apparatus 800.

Optionally, the communication apparatus 800 may further include a storage module (not shown in FIG. 8). The storage module stores a program or instructions. When the processing module 802 executes the program or the instructions, the communication apparatus 800 can perform the functions in the method shown in FIG. 4 to FIG. 7a and FIG. 7b.

It can be understood that the communication apparatus 800 may be a network device, a chip (system) or another part or component that may be disposed in the network device, or an apparatus including the network device. This is not limited in this application.

In addition, for technical effects of the communication apparatus 800, refer to the technical effects of the foregoing communication method. Details are not described herein again.

FIG. 9 is a diagram 2 of a structure of a communication apparatus according to an embodiment of this application. For example, the communication apparatus may be a terminal, or a chip (system) or another part or component that may be disposed in the terminal. As shown in FIG. 9, the communication apparatus 900 may include a processor 901. Optionally, the communication apparatus 900 may further include a memory 902 and/or a transceiver 903. The processor 901 is coupled to the memory 902 and the transceiver 903, for example, may be connected to the memory 902 and the transceiver 903 through a communication bus.

The following describes the parts of the communication apparatus 900 in detail with reference to FIG. 9.

The processor 901 is a control center of the communication apparatus 900, and may be one processor, or may be a collective term for a plurality of processing elements. For example, the processor 901 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 901 may perform various functions of the communication apparatus 900 by running or executing a software program stored in the memory 902 and invoking data stored in the memory 902, for example, perform the communication method shown in FIG. 4 to FIG. 7a and FIG. 7b.

During specific implementation, in an embodiment, the processor 901 may include one or more CPUs, for example, a CPU 0 and a CPU 1 shown in FIG. 9.

During specific implementation, in an embodiment, the communication apparatus 900 may alternatively include a plurality of processors, for example, the processor 901 and a processor 904 shown in FIG. 9. Each of the processors may be a single-core processor (single-CPU), or may be a multi-core processor (multi-CPU). The processor herein may be one or more devices, circuits, and/or processing cores configured to process data (for example, computer program instructions).

The memory 902 is configured to store a software program for performing the solutions in this application, and the processor 901 controls execution. For specific implementation, refer to the foregoing method embodiments. Details are not described herein again.

Optionally, the memory 902 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can carry or store expected program code in a form of instructions or data structures and that is accessible to a computer, but is not limited thereto. The memory 902 may be integrated with the processor 901; or may exist independently, and is coupled to the processor 901 through an interface circuit (not shown in FIG. 9) of the communication apparatus 900. This is not specifically limited in this embodiment of this application.

The transceiver 903 is configured to communicate with another communication apparatus. For example, the communication apparatus 900 is a terminal, and the transceiver 903 may be configured to communicate with a network device or communicate with another terminal device. For another example, the communication apparatus 900 is a network device, and the transceiver 903 may be configured to communicate with a terminal or communicate with another network device.

Optionally, the transceiver 903 may include a receiver and a transmitter (not separately shown in FIG. 9). The receiver is configured to implement a receiving function, and the transmitter is configured to implement a sending function.

Optionally, the transceiver 903 may be integrated with the processor 901; or may exist independently, and is coupled to the processor 901 through an interface circuit (not shown in FIG. 9) of the communication apparatus 900. This is not specifically limited in this embodiment of this application.

It may be understood that the structure of the communication apparatus 900 shown in FIG. 9 does not constitute a limitation on the communication apparatus. An actual communication apparatus may include more or fewer parts than those shown in the figure, or some parts may be combined, or different part arrangements may be used.

In addition, for technical effects of the communication apparatus 900, refer to the technical effects of the method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving, by a user plane network element serving a first terminal, information about the first terminal from the first terminal;
determining, by the user plane network element based on the information about the first terminal, a session management network element serving the first terminal, and/or determining a session between the user plane network element and the session management network element;
sending, by the user plane network element, authentication information of the first terminal or first information to the session management network element, or transferring, by the user plane network element, the authentication information of the first terminal or the first information through the session;
receiving, by the session management network element, the authentication information of the first terminal or the first information from the user plane network element, or receiving, by the session management network element, the authentication information of the first terminal or the first information that is transferred through the session;
triggering, by the session management network element, authentication on the first terminal based on the authentication information of the first terminal or the first information; and
establishing, by the user plane network element, a secure channel to the first terminal when the authentication on the first terminal succeeds.

2. The method according to claim 1, wherein the information about the first terminal comprises at least one of address information of the first terminal, temporary identity information of the first terminal, permanent identifier information of the first terminal, or service information of the first terminal.

3. The method according to claim 1, wherein the first information is first indication information, or the first information is permanent identifier information of the first terminal or temporary identity information of the first terminal, and the first indication information indicates the session management network element to initiate an authentication procedure for the first terminal.

4. The method according to claim 1 or 3, wherein triggering, by the session management network element, the authentication on the first terminal based on the first information comprises:
sending, by the session management network element, identifier information of the first terminal to an authentication network element serving the first terminal; or generating, by the session management network element, an EAP message, wherein the EAP message comprises the identifier information of the first terminal, and sending, by the session management network element, the EAP message to the authentication network element;
receiving, by the authentication network element, the identifier information of the first terminal from the session management network element; or receiving, by the authentication network element, the EAP message from the session management network element, and obtaining the identifier information of the first terminal from the EAP message;
obtaining, by the authentication network element based on the identifier information of the first terminal, an authentication vector of the first terminal from a data management network element serving the first terminal;
performing, by the authentication network element, authentication on the first terminal based on the authentication vector;
sending, by the authentication network element, at least one of authentication success information or a security key to the session management network element when the authentication performed by the authentication network element on the first terminal succeeds;
receiving, by the session management network element, the at least one of the authentication success information or the security key from the authentication network element; and
sending, by the session management network element, the at least one of the authentication success information or the security key to the user plane network element.

5. The method according to claim 4, wherein the method further comprises:
receiving, by the user plane network element, the at least one of the authentication success information or the security key from the session management network element; and
determining, by the user plane network element based on the at least one of the authentication success information or the security key, that the authentication on the first terminal succeeds.

6. The method according to claim 5, wherein establishing, by the user plane network element, the secure channel to the first terminal comprises:
establishing, by the user plane network element, the secure channel between the user plane network element and the first terminal by using the security key.

7. The method according to any one of claims 1 to 6, wherein determining, by the user plane network element based on the information about the first terminal, the session management network element serving the first terminal comprises:
obtaining, by the user plane network element, the service information of the first terminal; and
selecting, by the user plane network element, a session management network element that supports the service information of the first terminal as the session management network element serving the first terminal.

8. The method according to any one of claims 1 to 6, wherein determining, by the user plane network element based on the information about the first terminal, the session management network element serving the first terminal comprises:
determining, by the user plane network element, the service information of the first terminal based on a configuration of the user plane network element, and selecting a session management network element that supports the service information of the first terminal as the session management network element serving the first terminal.

9. The method according to claim 7 or 8, wherein the method further comprises:
receiving, by the user plane network element from at least one session management network element, service information supported by the at least one session management network element, wherein the at least one session management network element comprises the session management network element serving the first terminal.

10. A communication method, wherein the method comprises:
receiving, by a user plane network element serving a first terminal, information about the first terminal from the first terminal;
determining, by the user plane network element based on the information about the first terminal, a session management network element serving the first terminal, and/or determining a session between the user plane network element and the session management network element;
sending, by the user plane network element, authentication information of the first terminal or first information to the session management network element, or transferring, by the user plane network element, the authentication information of the first terminal or the first information through the session, wherein the authentication information of the first terminal or the first information is used for authentication on the first terminal; and
establishing, by the user plane network element, a secure channel to the first terminal when the authentication on the first terminal succeeds.

11. The method according to claim 10, wherein the information about the first terminal comprises at least one of address information of the first terminal, temporary identity information of the first terminal, permanent identifier information of the first terminal, or service information of the first terminal.

12. The method according to claim 10, wherein the first information is first indication information, or the first information is permanent identifier information of the first terminal or temporary identity information of the first terminal, and the first indication information indicates the session management network element to initiate an authentication procedure for the first terminal.

13. The method according to claim 10 or 12, wherein the method further comprises:
receiving, by the user plane network element, at least one of authentication success information or a security key from the session management network element, wherein the security key is a key determined in the authentication procedure for the first terminal; and
determining, by the user plane network element based on the at least one of the authentication success information or the security key, that the authentication on the first terminal succeeds.

14. The method according to claim 13, wherein establishing, by the user plane network element, the secure channel to the first terminal comprises:
establishing, by the user plane network element, the secure channel between the user plane network element and the first terminal by using the security key.

15. The method according to any one of claims 10 to 14, wherein determining, by the user plane network element based on the information about the first terminal, the session management network element serving the first terminal comprises:
obtaining, by the user plane network element, the service information of the first terminal; and
selecting, by the user plane network element, a session management network element that supports the service information of the first terminal as the session management network element serving the first terminal.

16. The method according to any one of claims 10 to 14, wherein determining, by the user plane network element based on the information about the first terminal, the session management network element serving the first terminal comprises:
determining, by the user plane network element, the service information of the first terminal based on a configuration of the user plane network element, and selecting a session management network element that supports the service information of the first terminal as the session management network element serving the first terminal.

17. The method according to claim 15 or 16, wherein the method further comprises:
receiving, by the user plane network element from at least one session management network element, service information supported by the at least one session management network element, wherein the at least one session management network element comprises the session management network element serving the first terminal.

18. A communication method, wherein the method comprises:
receiving, by a session management network element serving a first terminal, authentication information of the first terminal or first information from a user plane network element serving the first terminal, or receiving, by the session management network element, the authentication information of the first terminal or the first information that is transferred through a session between the user plane network element and the session management network element; and
triggering, by the session management network element, authentication on the first terminal based on the authentication information of the first terminal or the first information.

19. The method according to claim 18, wherein the first information is first indication information, or the first information is permanent identifier information of the first terminal or temporary identity information of the first terminal, and the first indication information indicates the session management network element to initiate an authentication procedure for the first terminal.

20. The method according to claim 18 or 19, wherein triggering, by the session management network element, the authentication on the first terminal based on the first information comprises:
sending, by the session management network element, identifier information of the first terminal to an authentication network element serving the first terminal; or generating, by the session management network element, an EAP message, and sending the EAP message to the authentication network element, wherein the EAP message comprises the identifier information of the first terminal, and the identifier information of the first terminal is used to trigger the authentication network element to perform authentication on the first terminal;
receiving, by the session management network element, at least one of the authentication success information or a security key from the authentication network element when the authentication performed by the authentication network element on the first terminal succeeds, wherein the security key is a key determined in the authentication procedure for the first terminal; and
sending, by the session management network element, the at least one of the authentication success information or the security key to the user plane network element.

21. The method according to any one of claims 18 to 20, wherein the method further comprises:
sending, by the session management network element, service information supported by the session management network element to the user plane network element.

22. A communication apparatus, wherein the apparatus comprises a module configured to perform the method according to any one of claims 1 to 21.

23. A communication apparatus, wherein the communication apparatus comprises a processor and a memory, the memory is configured to store computer instructions, and when the processor executes the instructions, the communication apparatus is caused to perform the method according to any one of claims 1 to 21.

24. A communication system, wherein the system comprises at least one of the following: a user plane network element configured to perform the method according to any one of claims 10 to 17, or a session management network element configured to perform the method according to any one of claims 18 to 21.

25. A computer-readable storage medium, wherein the computer-readable storage medium comprises a computer program or instructions, and when the computer program or the instructions are run on a computer, the computer is caused to perform the method according to any one of claims 1 to 21.

26. A computer program product, wherein the computer program product comprises a computer program or instructions, and when the computer program or the instructions are run on a computer, the computer is caused to perform the method according to any one of claims 1 to 21.
